(19) Europäisches Patentamt / European Patent Office / Office européen des brevets

(11) EP 4 556 532 A1

(12) **EUROPEAN PATENT APPLICATION**
published in accordance with Art. 153(4) EPC

(43) Date of publication:
**21.05.2025 Bulletin 2025/21**

(21) Application number: **23839472.0**

(22) Date of filing: **29.06.2023**

(51) International Patent Classification (IPC):
***C09D 4/02*** *(2006.01)* ***B32B 27/30*** *(2006.01)*
***C08F 290/06*** *(2006.01)* ***C08J 7/04*** *(2020.01)*
***C09D 175/16*** *(2006.01)*

(52) Cooperative Patent Classification (CPC):
**B32B 27/30; C08F 290/06; C08J 7/04; C09D 4/00; C09D 175/16**

(86) International application number:
**PCT/JP2023/024117**

(87) International publication number:
**WO 2024/014298 (18.01.2024 Gazette 2024/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.07.2022 JP 2022111666**

(71) Applicant: **DIC Corporation**
**Tokyo 174-8520 (JP)**

(72) Inventors:
- **OKA, Kenichirou**
  **Ichihara-shi, Chiba 290-8585 (JP)**
- **TAKADA, Yasuhiro**
  **Ichihara-shi, Chiba 290-8585 (JP)**

(74) Representative: **TBK**
**Bavariaring 4-6**
**80336 München (DE)**

(54) **ACTIVE-ENERGY-RAY-CURABLE COATING COMPOSITION AND MOLDED ARTICLE**

(57) An object of the invention is to provide an active-energy-ray-curable coating composition, which is advantageous in that a cured film having excellent weathering resistance, wear resistance, and chemical resistance can be formed from the composition, and a molded article having having the cured film. The invention is directed to an active-energy-ray-curable coating composition containing a compound of the formula (1) as a component (A), a compound of the formula (2) as a component (B), and a compound having 6 or more (meth)acryloyl groups per molecule as a component (C) (wherein, in the formulae, $R^1$, $R^2$, and $R^3$ are an oxyalkylene group or the like; $X^1$, $X^2$, and $X^3$ are $CH_2=CR^4-CO-$, $CH_2=CR^4-CO(O(CH_2)_5-CO)_{a1}-$, H, or an alkyl group, wherein $R^4$ is H or a methyl group, and a1 is an integer of 1 or more; $R^{21}$ to $R^{25}$ are a group having a polymerizable group; $Z^{21}$ to $Z^{23}$ are a group of the formula (2z); $L^{21}$ and $L^{22}$ are a divalent linking group; n1 and n2 are 0 or 1; $X^{21}$ is an alkylene group; * is a bonding site; $Z^1$ is O or N; and $Z^2$ is H or -C(=O)-).

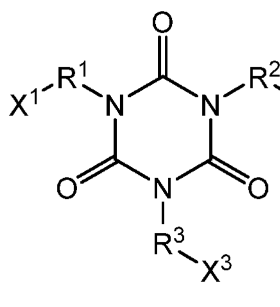

(1)

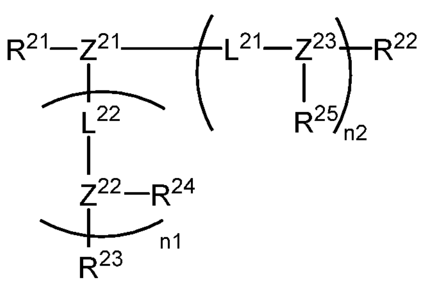

(2)

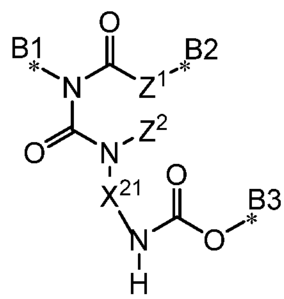

(2z)

## Description

### TECHNICAL FIELD

The present invention relates to an active-energy-ray-curable coating composition and a molded article.

### BACKGROUND ART

Resin materials, particularly transparent resin materials, such as polycarbonate, have characteristic features such that the resin materials have a small specific gravity or are lightweight, that the materials can be easily processed, and that the resin materials have high resistance to an impact, as compared to inorganic glass, and thus the resin materials have been widely used in various applications.

Meanwhile, the resin materials have a number of drawbacks in that the surface of the resin material is easily damaged to lose glossiness or transparency, that the resin materials are likely to suffer erosion by an organic solvent, that the materials have poor weathering resistance (for example, poor light stability to an ultraviolet light or the like), and that the materials have poor heat resistance. For this reason, the resin material is generally coated with various types of protective films for the purpose of improving the surface properties.

As examples of such protective films, there can be mentioned a hard coat layer obtained by curing an active-energy-ray-curable coating composition.

The resin materials which are used outside are required to have wear resistance as well as excellent weathering resistance. With respect to the active-energy-ray-curable coating composition having both wear resistance and weathering resistance, there has been known an active-energy-ray-curable composition using a mono- or polypentaerythritol poly(meth)acrylate compound modified with caprolactone, urethane (meth)acrylate having an isocyanurate ring, and poly [(meth)acryloyloxyalkyl] isocyanurate in a specific ratio (see PTL 1).

Further, PTL 2 discloses an ultraviolet curable coating composition comprising a urethane acrylate having 4 to 9 acryloyl groups in the molecule thereof, a urethane acrylate having 1 to 3 acryloyl groups in the molecule thereof and having a polyester skeleton in the resin skeleton, a urethane acrylate having 1 to 3 acryloyl groups in the molecule thereof and having no polyester skeleton in the resin skeleton, an acetophenone photopolymerization initiator, a phosphine oxide photopolymerization initiator, an ultraviolet light absorber, and a light stabilizer combined in a specific ratio, wherein the composition has not only excellent transparency, wear resistance, and weathering resistance but also excellent warm water resistance.

### CITATION LIST

### PATENT LITERATURE

PTL 1: JP2007-314770A

PTL 2: JP5956401B

### SUMMARY OF INVENTION

### TECHNICAL PROBLEM

In recent years, the resin material and active-energy-ray-curable coating composition, which are possibly used in a severe environment, such as an outdoor environment or an environment around the automobile, are needed to have not only a weathering resistance and a wear resistance but also a resistance to acid rain or liquid of an automobile battery electrolyte, i.e., excellent chemical resistance.

However, in the inventions described in PTLs 1 and 2, studies on a chemical resistance are not made, and the inventions described in PTLs 1 and 2 cannot solve the problems about all of the chemical resistance, weathering resistance, and wear resistance.

In view of the above-mentioned problems, the invention has been made, and a task of the invention is to provide an active-energy-ray-curable coating composition which is advantageous in that a cured film having a weathering resistance and a wear resistance as well as high chemical resistance can be formed from the composition, and a molded article having the cured film.

SOLUTION TO PROBLEM

The present inventors have conducted extensive and intensive studies. As a result, it has been found that the above-mentioned problems can be solved by an active-energy-ray-curable coating composition which comprises:

as a component (A), (a)an (meth)acrylate compound represented by the below-shown formula (1), which has an isocyanurate linkage,
as a component (B), a compound represented by the below-shown formula (2), which has an isocyanurate linkage or an allophanate linkage and at least one urethane linkage different from these linkages, and
as a component (C), a compound having 6 or more (meth)acryloyl groups per molecule,

and the invention has been completed.
Specifically, the invention provides the following invention.

(1) An active-energy-ray-curable coating composition comprising components (A) to (C),

the active-energy-ray-curable coating composition containing a compound represented by the following formula (1) as the component (A),
containing a compound represented by the following formula (2) as the component (B), and
containing a compound having 6 or more (meth)acryloyl groups per molecule as the component (C):

[Chem. 1]

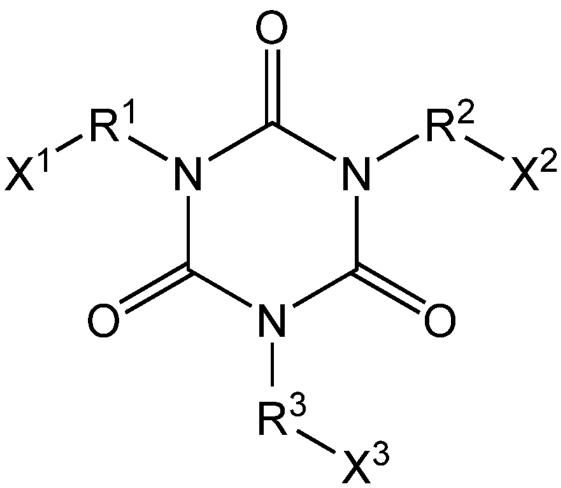

(1)

wherein each of $R^1$, $R^2$, and $R^3$ independently represents an oxyalkylene group or a polyoxyalkylene group, and each of $X^1$, $X^2$, and $X^3$ independently represents $CH_2=CR^4-CO-$, $CH_2=CR^4-CO(O(CH_2)_5-CO)_{a1}-$, a hydrogen atom, or an alkyl group, wherein $R^4$ represents a hydrogen atom or a methyl group, and a plurality of $R^4$'s are the same or different, and a1 is an integer of 1 or more, with the proviso that at least two of $X^1$ to $X^3$ are $CH_2=CR^4-CO-$ or $CH_2=CR^4-CO(O(CH_2)_5-CO)_{a1}-$;

[Chem. 2]

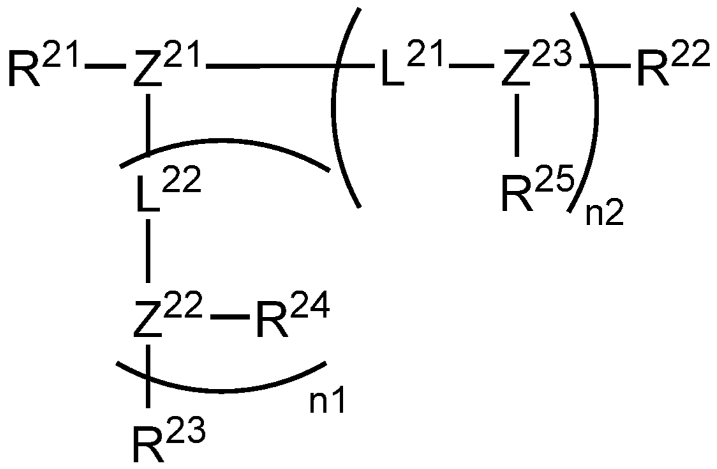

(2)

wherein each of $R^{21}$ to $R^{25}$ independently represents a group having a polymerizable group, each of $Z^{21}$ to $Z^{23}$ independently represents a group represented by the following formula (2z), each of $L^{21}$ and $L^{22}$ independently represents a divalent linking group, and each of n1 and n2 is independently 0 or 1,

[Chem. 3]

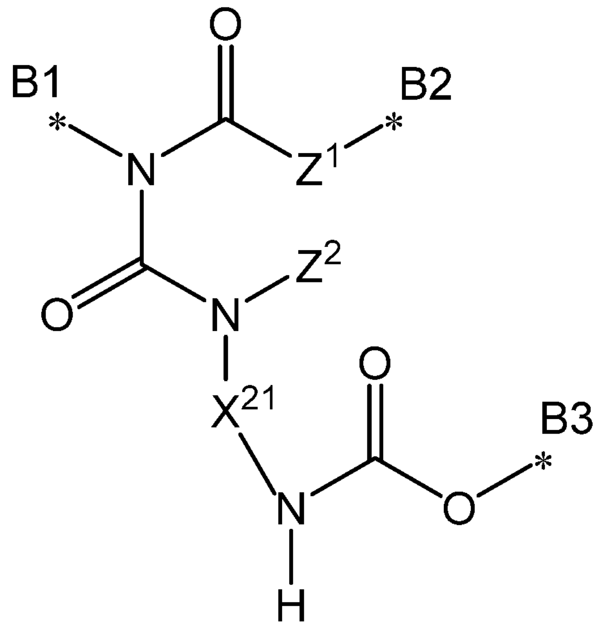

(2z)

wherein $X^{21}$ represents an alkylene group having 2 to 17 carbon atoms,

* is a bonding site,

$Z^1$ represents an oxygen atom or a nitrogen atom, and $Z^2$ represents a hydrogen atom or - C(=O)-, wherein when $Z^1$ is an oxygen atom, $Z^2$ is a hydrogen atom, or, when $Z^1$ is a nitrogen atom, $Z^2$ is -C(=O)- and the nitrogen atom of $Z^1$ and -C(=O)- of $Z^2$ are bonded to form a ring, wherein when the formula (2z) is in the formula (2), the bonding site * indicated by B1 is bonded to $R^{21}$, the bonding site indicated by B2 is bonded to $L^{21}$ or $R^{22}$, and the bonding site indicated by B3 is bonded to $L^{22}$ or $R^{23}$; when the formula (2z) is $Z^{22}$ in the formula (2), the bonding site * indicated by B1 is bonded to $L^{22}$, the bonding site indicated by B2 is bonded to $R^{24}$, and the bonding site indicated by B3 is bonded to $R^{23}$; and when the formula (2z) is $Z^{23}$ in the formula (2), the bonding site * indicated by B1 is bonded to $L^{21}$, the bonding site indicated by B2 is bonded to $R^{22}$, and the bonding site indicated by B3 is bonded to $R^{25}$.

(2) The active-energy-ray-curable coating composition according to item (1) above, wherein the compound represented by the formula (2) above is any one of compounds represented by the following formulae (2-1) to (2-4):

[Chem. 4]

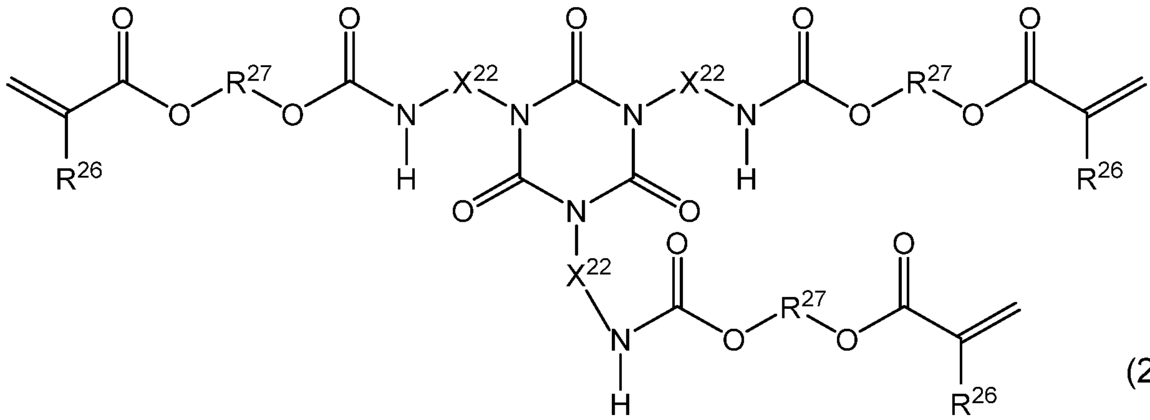

(2-1)

wherein each $R^{26}$ independently represents a hydrogen atom or a methyl group,

each $R^{27}$ independently represents an alkylene group, $R^A$-(O-CO-$(CH_2)_5)_n$-, or $R^A$-(O-$(CH_2)_4)_n$-, wherein $R^A$ represents an alkylene group, and each n independently represents an integer of 1 to 10, and

each $X^{22}$ independently represents an alkylene group having 2 to 17 carbon atoms, wherein a plurality of $R^{26}$'s, $R^{27}$'s, and $X^{22}$'s in the formula are the same or different;

[Chem. 5]

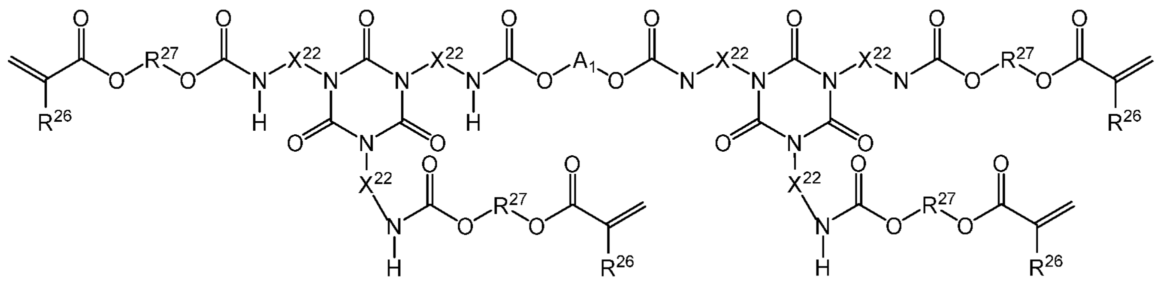

(2-2)

wherein $R^{26}$, $R^{27}$, and $X^{22}$ are as defined above, and

$A_1$ represents a structure obtained by removing a hydroxyl group from an end of an alkylene diol, a caprolactone-modified diol, or polytetramethylene glycol, wherein a plurality of $R^{26}$'s, $R^{27}$'s, $X^{22}$'s, and $A_1$'s in the formula are the same or different;

[Chem. 6]

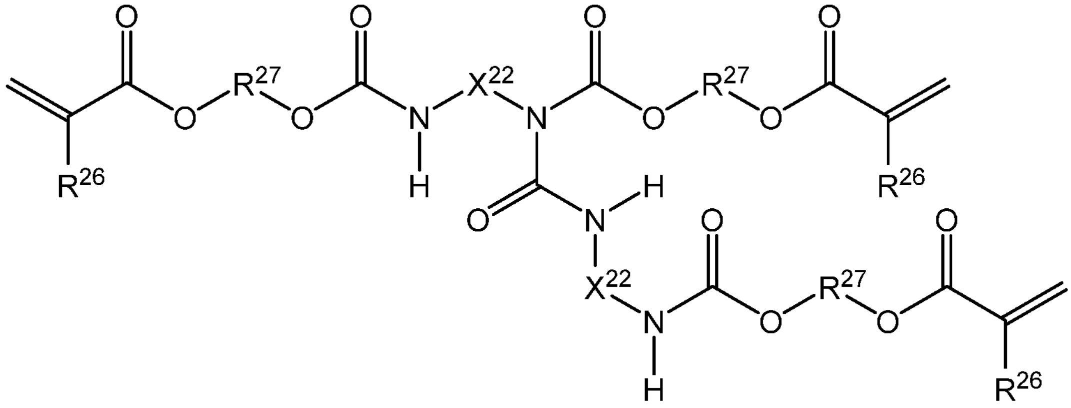

(2-3)

wherein $R^{26}$, $R^{27}$, and $X^{22}$ are as defined above, and a plurality of $R^{26}$'s, $R^{27}$'s, and $X^{22}$'s in the formula are the same or different;

[Chem. 7]

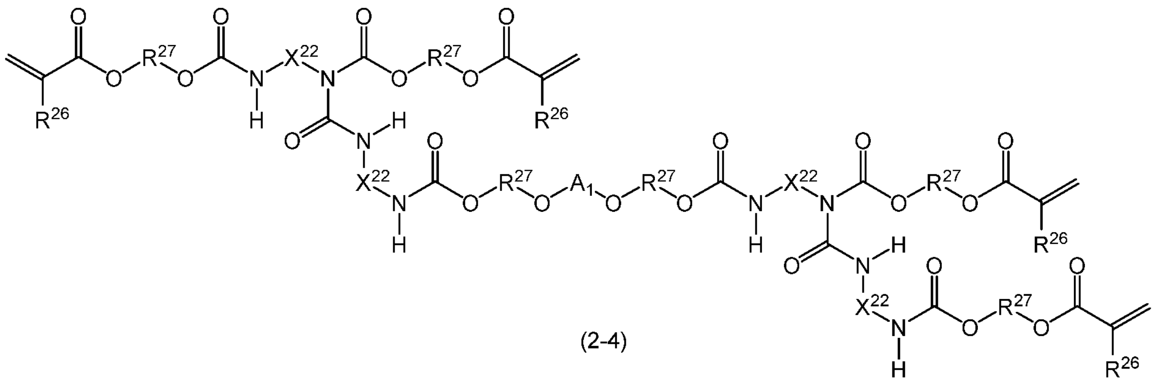

(2-4)

wherein $R^{26}$, $R^{27}$, $X^{22}$, and $A_1$ are as defined above, and a plurality of $R^{26}$'s, $R^{27}$'s, and $X^{22}$'s in the formula are the same or different.

(3) The active-energy-ray-curable coating composition according to item (1) or (2) above, wherein the amount of the contained component (A) is 1 to 85% by mass, the amount of the contained component (B) is 14 to 98% by mass, and the amount of the contained component (C) is 1 to 20% by mass, based on the total mass of the solids contained in the components (A) to (C).

(4) The active-energy-ray-curable coating composition according to any one of items (1) to (3) above, wherein the component (C) is a polyfunctional urethane acrylate obtained by reacting a diisocyanate compound or a triisocyanate compound and a compound represented by the following formula (3-1) or (3-2):

[Chem. 8]

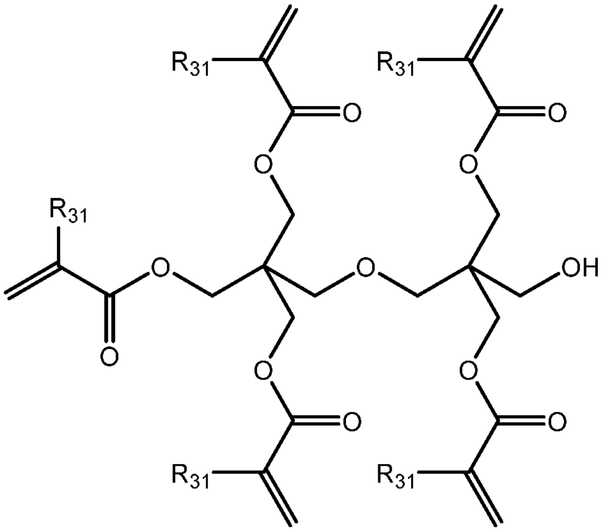

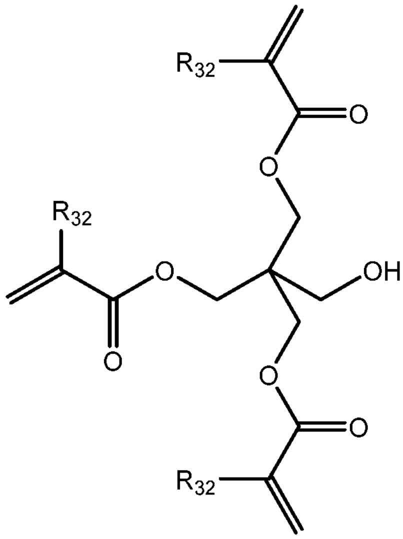

(3-1) (3-2)

wherein each of $R^{31}$ and $R^{32}$ independently represents a hydrogen atom or a methyl group, wherein a plurality of $R^{31}$'s and $R^{32}$'s in the formula are the same or different.

(5) The active-energy-ray-curable coating composition according to any one of items (1) to (4) above, wherein the component (C) is a polyfunctional urethane acrylate obtained by reacting an isocyanate compound represented by the following formula (3-3) or (3-4) and the compound represented by the formula (3-1) or (3-2) above:

[Chem. 9]

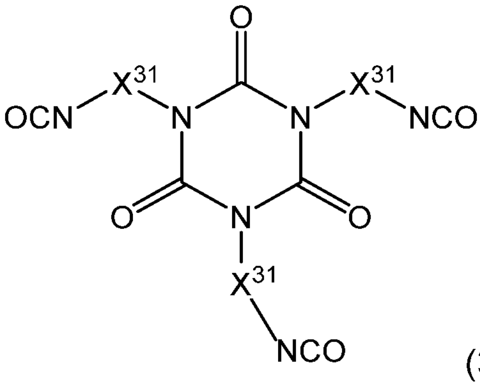

(3-3)

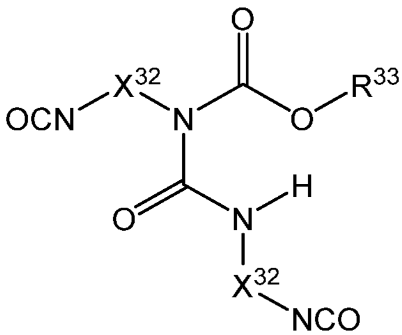

(3-4)

wherein each of $X^{31}$ and $X^{32}$ independently represents an alkylene group having 2 to 17 carbon atoms, and $R^{33}$ represents $-R^C-O-CO-CH=CH_2$, or a structure obtained by removing a hydroxyl group from the compound represented by the formula (3-1) or (3-2) above, wherein $R^C$ represents an alkylene group, wherein a plurality of $X^{31}$'s and $X^{32}$'s in the formula are the same or different.

(6) The active-energy-ray-curable coating composition according to any one of items (2) to (5) above, wherein the component (B) comprises a component (B-1) and a component (B-2),

wherein the component (B-1) comprises a compound of the formula (2-1) or (2-3) wherein at least one $R^{27}$ is $R^A-(O-CO-(CH_2)_5)_n-$ or $R^A-(O-(CH_2)_4)_n-$, or a compound of the formula (2-2) or (2-4) wherein $A_1$ has a structure obtained by removing a hydroxyl group from an end of polytetramethylene glycol or polycaprolactone diol, and wherein the component (B-2) comprises a compound of the formula (2-1) or (2-3) wherein $R^{27}$ is an alkylene group, or a compound of the formula (2-2) or (2-4) wherein $A_1$ has a structure obtained by removing a hydroxyl group from an end of an alkylene diol,

wherein the amount of the contained component (B-1) is 9 to 90% by mass, and the amount of the contained component (B-2) is 5 to 60% by mass, based on the total mass of the solids contained in the components (A) to (C).

(7) A molded article having a cured film of the active-energy-ray-curable coating composition according to any one of items (1) to (6) above, and a substrate.
(8) The molded article according to item (7) above, wherein the substrate is a polycarbonate resin.
(9) A molded article which is obtained by curving the molded article according to item (7) or (8) above by heat bending processing.
(10) The molded article according to any one of items (7) to (9) above, which is for use in the automobile headlight lens application, automobile glazing application, automobile body exterior trim application, plastic building material application, or steel plate building material application.

ADVANTAGEOUS EFFECTS OF INVENTION

From the active-energy-ray-curable coating composition of the invention, a cured film having excellent chemical resistance and high weathering resistance and wear resistance can be formed. The cured film exhibits excellent adhesion to a resin material, such as polycarbonate, and has excellent adhesion even in a high-temperature high-humidity environment. Therefore, the active-energy-ray-curable coating composition of the invention can be advantageously used as a hard coat for a resin material in the automobile application or building material application.

DESCRIPTION OF EMBODIMENTS

<Active-energy-ray-curable coating composition>

The active-energy-ray-curable coating composition of the invention (hereinafter, frequently referred to simply as "coating composition" or "composition") comprises components (A) to (C).
In the present specification, the compound represented by the formula (1) is referred to as "compound (1)", and this applies to compounds represented by the other formulae. Further, "acrylate" and "methacrylate" are collectively referred to as "(meth)acrylate". The combination of "acrylic acid" and "methacrylic acid", the combination of "acryloyl group" and "methacryloyl group", and the combination of "acryloyloxy group" and "methacryloyloxy group" are described similarly using "(meth)" for expressing both compounds or groups.

[Component (A)]

The component (A) is a compound represented by the following formula (1), and the coating composition contains the component (A) and therefore a cured film obtained from the coating composition is improved in the wear resistance and adhesion.

[Chem. 10]

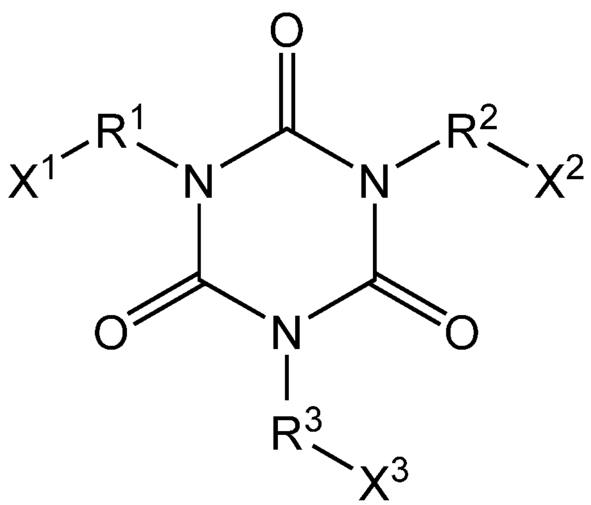

(1)

In the formula (1), each of $R^1$, $R^2$, and $R^3$ is independently an oxyalkylene group or a polyoxyalkylene group.
The oxyalkylene group preferably has 1 to 8 carbon atoms, more preferably 1 to 5 carbon atoms, especially preferably 1 to 3 carbon atoms.
The polyoxyalkylene group preferably has 1 to 8 carbon atoms per repeating unit, more preferably 1 to 5 carbon

atoms, especially preferably 1 to 3 carbon atoms. Further, the number of repetition of the oxyalkylene group in the polyoxyalkylene group is preferably in the range of from 1 to 10.

The oxygen atom of the oxyalkylene group and the oxygen atom at an end of the polyoxyalkylene group are bonded to $X^1$, $X^2$, or $X^3$ in the formula.

Each of $X^1$, $X^2$, and $X^3$ independently represents $CH_2=CR^4-CO-$, $CH_2=CR^4-CO(O(CH_2)_5-CO)_{a1}-$, a hydrogen atom, or an alkyl group, and at least two of $X^1$ to $X^3$ are $CH_2=CR^4-CO-$ or $CH_2=CR^4-CO(O(CH_2)_5-CO)_{a1}-$. That is, the compound (1) is a difunctional or trifunctional (meth)acrylate.

$R^4$ represents a hydrogen atom or a methyl group, and a plurality of $R^4$'s may be the same or different, but are preferably a hydrogen atom.

a1 is an integer of 1 or more, preferably an integer of 1 to 3, more preferably 1 or 2, especially preferably 1.

Particularly, it is preferred that $X^1$, $X^2$, and $X^3$ are $CH_2=CR^4-CO-$, $CH_2=CR^4-CO(O(CH_2)_5-CO)_{a1}-$, or a hydrogen atom, it is more preferred that at least two of $X^1$ to $X^3$ are $CH_2=CR^4-CO-$, and it is especially preferred that all of $X^1$ to $X^3$ are $CH_2=CR^4-CO-$.

Especially preferred examples of the compound (1) include a compound represented by the formula (1-1) below.

In the formula below, $R^4$ is as defined above, and $R^{1'}$ to $R^{3'}$ are an alkylene group having 1 to 5 carbon atoms (preferably 1 to 3 carbon atoms).

[Chem. 11]

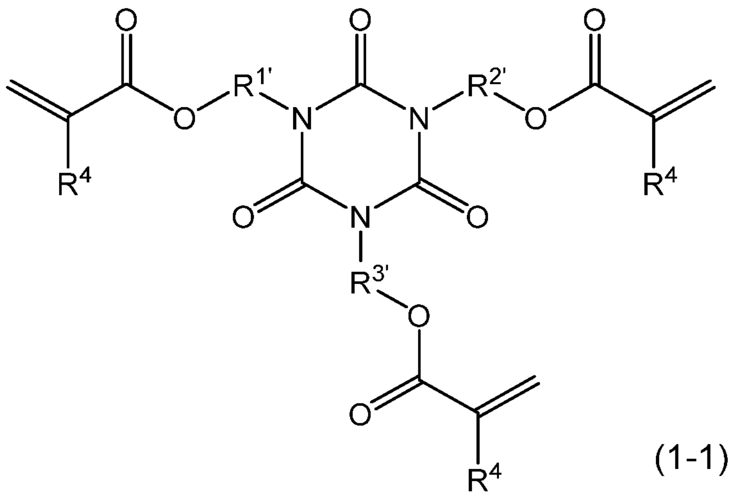

(1-1)

Specific examples of structures of the component (A) include bis(2-acryloyloxyethyl)hydroxyethyl isocyanurate, tris(2-acryloyloxyethyl) isocyanurate (trade name: ARONIX M-313, ARONIX M-315, manufactured by Toagosei Co., Ltd.; trade name: NK Ester A9300, A9300S, manufactured by Shin-Nakamura Chemical Co., Ltd.; SR368, SR368NS, manufactured by Arkema K.K.), bis(2-acryloyloxypropyl)hydroxyethyl isocyanurate, tris(2-acryloyloxypropyl) isocyanurate, tris(2-acryloyloxyethyl) isocyanurate modified with one caprolactone per molecule (trade name: ARONIX M-325, manufactured by Toagosei Co., Ltd.), and tris(2-acryloyloxyethyl) isocyanurate modified with three caprolactones per molecule (trade name: ARONIX M-327, manufactured by Toagosei Co., Ltd.).

With respect to the component (A), the compounds may be used individually or in combination of two or more types thereof.

The amount of the contained component (A) is preferably 1 to 85% by mass, more preferably 2.5 to 70% by mass, further preferably 5 to 50% by mass, especially preferably 8 to 20% by mass, based on the total mass of the solids contained in the components (A) to (C) (100% by mass). When the amount of the component (A) is the above-mentioned lower limit or more, the wear resistance and adhesion are further improved, and, when the amount of the component (A) is the above-mentioned upper limit or less, the weathering resistance and chemical resistance are further improved.

[Component (B)]

The component (B) is a compound represented by the formula (2), and the coating composition contains the component (B) and therefore a cured film obtained from the coating composition is improved in the weathering resistance and adhesion.

[Chem. 12]

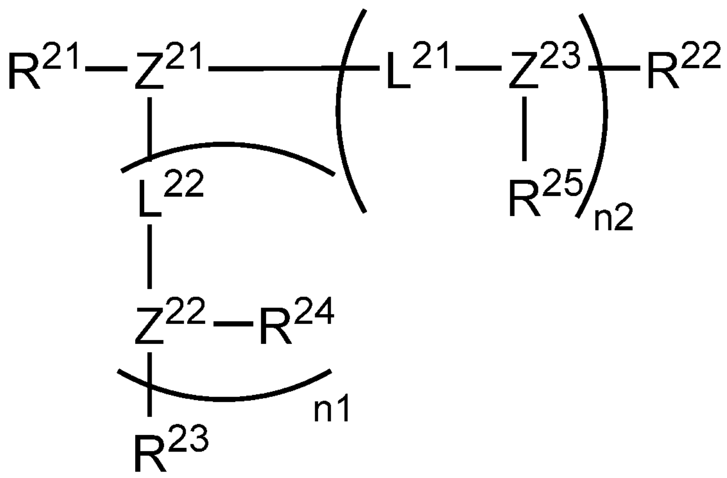

(2)

In the formula (2), each of $R^{21}$ to $R^{25}$ is independently a group having a polymerizable group.

The polymerizable group of $R^{21}$ to $R^{25}$ is preferably (a)an (meth)acryloyl group ($CH_2=CR^4-CO-$ (wherein $R^4$ is as defined above)), and $R^{21}$ to $R^{25}$ are preferably a combination of (a)an (meth)acryloyl group and a divalent linking group.

Examples of the divalent linking groups of $R^{21}$ to $R^{25}$ include an alkylene group having 1 to 30 carbon atoms and optionally having a substituent, an oxyalkylene group having 1 to 30 carbon atoms and optionally having a substituent, -O-, -C(=O)-O-, -O-C(=O)-, - C(=O)-, -O-C(=O)-O-, -C(=O)-NH-, -NH-C(=O)-, -O-C(=O)-NH-, -NH-C(=O)-O-, -NH-, -C(=NH)-NH-, -NH-C(=NH)-, and a combination thereof. The hydrogen atom of the groups mentioned as examples of the divalent linking groups can be substituted with an alkyl group, an alkoxy group, an acyl group, or the like.

Each of n1 and n2 is independently 0 or 1.

Each of $L^{21}$ and $L^{22}$ is independently a divalent linking group.

Divalent linking groups $L^{21}$ and $L^{22}$ preferably have a structure obtained by removing a hydroxyl group from both ends of an alkylene diol, a caprolactone-modified diol, or polytetramethylene glycol. The alkylene diol is preferably an alkylene diol having 2 to 10 carbon atoms, and the number of repetition of the tetramethylene group in the polytetramethylene glycol is preferably 8 to 30.

Examples of caprolactone-modified diols include "Placcel 205" which is a polycaprolactone diol having a mass average molecular weight of 530; "Placcel 205BA" which is a polycaprolactone diol having a mass average molecular weight of 530 and having a carboxyl group in the side chain; "Placcel L205AL" which is a polycaprolactone diol having a mass average molecular weight of 500 and being in a liquid state at ordinary room temperature; "Placcel 205H" which is a polycaprolactone diol having a mass average molecular weight of 530 and having an improved water resistance, as compared to Placcel 205; "Placcel 205U" which is a polycaprolactone diol having a mass average molecular weight of 530 and having a low viscosity and a low acid value, as compared to Placcel 205; "Placcel 208" which is a polycaprolactone diol having a mass average molecular weight of 830; "Placcel L208AL" which is a polycaprolactone diol having a mass average molecular weight of 830 and being in a liquid state at ordinary room temperature; "Placcel 210" which is a polycaprolactone diol having a mass average molecular weight of 1,000; "Placcel 210BA" which is a polycaprolactone diol having a mass average molecular weight of 1,000 and having a carboxyl group in the side chain; "Placcel 210CP" which is a

polycaprolactone diol having a mass average molecular weight of 1,000 and having a low acid value and an improved water resistance, as compared to Placcel 210; "Placcel 210N" which is a polycaprolactone diol having a mass average molecular weight of 1,000 and having a narrow molecular weight distribution, as compared to Placcel 210; "Placcel 212" which is a polycaprolactone diol having a mass average molecular weight of 1,250; "Placcel L212AL" which is a polycaprolactone diol having a mass average molecular weight of 1,250 and being in a liquid state at ordinary room temperature; "Placcel 220" which is a polycaprolactone diol having a mass average molecular weight of 2,000; "Placcel 220BA" which is a polycaprolactone diol having a mass average molecular weight of 2,000 and having a carboxyl group in the side chain; "Placcel 220CPB" which is a polycaprolactone diol having a mass average molecular weight of 2,000 and having a low acid value and an improved water resistance, as compared to Placcel 220; "Placcel 220N" which is a polycaprolactone diol having a mass average molecular weight of 2,000 and having a narrow molecular weight distribution, as compared to Placcel 220; "Placcel 220NP1" which is a polycaprolactone diol having a mass average molecular weight of 2,000 and having low crystalline properties, as compared to Placcel 220; "Placcel L220AL" which is a polycaprolactone diol having a mass average molecular weight of 2,000 and being in a liquid state at ordinary room temperature; "Placcel 230" which is a polycaprolactone diol having a mass average molecular weight of 3,000; "Placcel L230AL" which is a polycaprolactone diol having a mass average molecular weight of 3,000 and being in a liquid state at ordinary room temperature; "Placcel 230CP" which is a polycaprolactone diol having a mass average molecular weight of 3,000 and having a low acid value and an improved water resistance, as compared to Placcel 230; "Placcel 240" which is a polycaprolactone diol having a mass average molecular weight of 4,000; "Placcel 240CP" which is a polycaprolactone diol having a mass average molecular weight of 4,000 and having a low acid value and an improved water resistance, as compared to Placcel 240; "Placcel 220EB" which is a polycaprolactone diol having a mass average molecular weight of 2,000 and having an improved hydrolytic resistance, as compared to Placcel 220; and "Placcel 220EC" which is a polycaprolactone diol having a mass average molecular weight of 2,000 and having excellent elastic recovery, as compared to Placcel 220EB (each of which is a trade name, manufactured by Dicel Chemical Industries, Ltd.).

Of these, from the viewpoint of the weathering resistance and wear resistance of the obtained cured film, preferred is a polycaprolactone diol having a mass average molecular weight in the range of from 500 to 1,500, and more preferred is a polycaprolactone diol having a mass average molecular weight in the range of from 500 to 1,000.

Further, $L^{21}$ and $L^{22}$ preferably have an additional linking group, in addition to a structure obtained by removing a hydroxyl group from an end of an alkylene diol, a caprolactone-modified diol, or polytetramethylene glycol. With respect to the additional linking group, preferred are those mentioned above as examples of the "divalent linking group of $R^{21}$ to $R^{25}$".

Each of to $Z^{23}$ is independently a structure represented by the following formula (2z).

[Chem. 13]

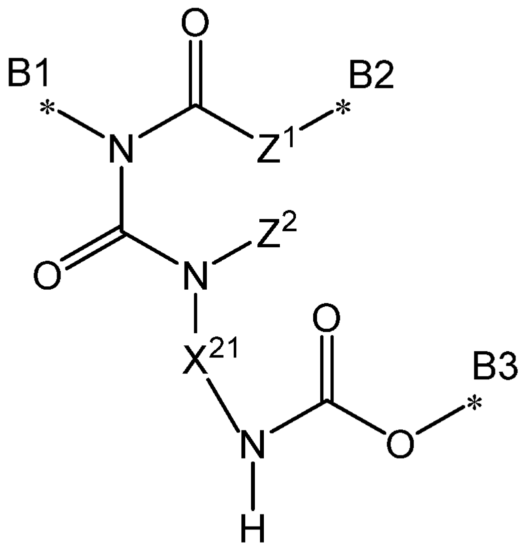

(2z)

In the formula (2z), $X^{21}$ is an alkylene group having 2 to 17 carbon atoms, more preferably an alkylene group having 2 to 10 carbon atoms, further preferably an alkylene group having 2 to 6 carbon atoms.

**[0042]** * shown in the formula (2z) is a bonding site, wherein when the formula (2z) is in the formula (2), the bonding site * indicated by B1 is directly bonded to $R^{21}$, the bonding site indicated by B2 is directly bonded to $L^{21}$ or $R^{22}$, and the bonding site indicated by B3 is directly bonded to $L^{22}$ or $R^{23}$; when the formula (2z) is $Z^{22}$ in the formula (2), the bonding site * indicated by B1 is directly bonded to $L^{22}$, the bonding site indicated by B2 is directly bonded to $R^{24}$, and the bonding site indicated by B3 is directly bonded to $R^{23}$; and when the formula (2z) is $Z^{23}$ in the formula (2), the bonding site * indicated by

B1 is directly bonded to $L^{21}$, the bonding site indicated by B2 is directly bonded to $R^{22}$, and the bonding site indicated by B3 is directly bonded to $R^{25}$.

$Z^1$ is an oxygen atom or a nitrogen atom, and $Z^2$ is a hydrogen atom or -C(=O)-, wherein when $Z^1$ is an oxygen atom (-O-), $Z^2$ is a hydrogen atom (-H), or, when $Z^1$ is a nitrogen atom, $Z^2$ is -C(=O)- and the nitrogen atom of $Z^1$ and -C(=O)- of $Z^2$ are bonded to form a ring. That is, when $Z^1$ is an oxygen atom, the formula (2z) is of a structure having an allophanate linkage, and, when $Z^1$ is a nitrogen atom, the formula (2z) is of a structure having an isocyanurate linkage.

Especially, the compound (2) is preferably compounds represented by the following formulae (2-1) to (2-4).

[Chem. 14]

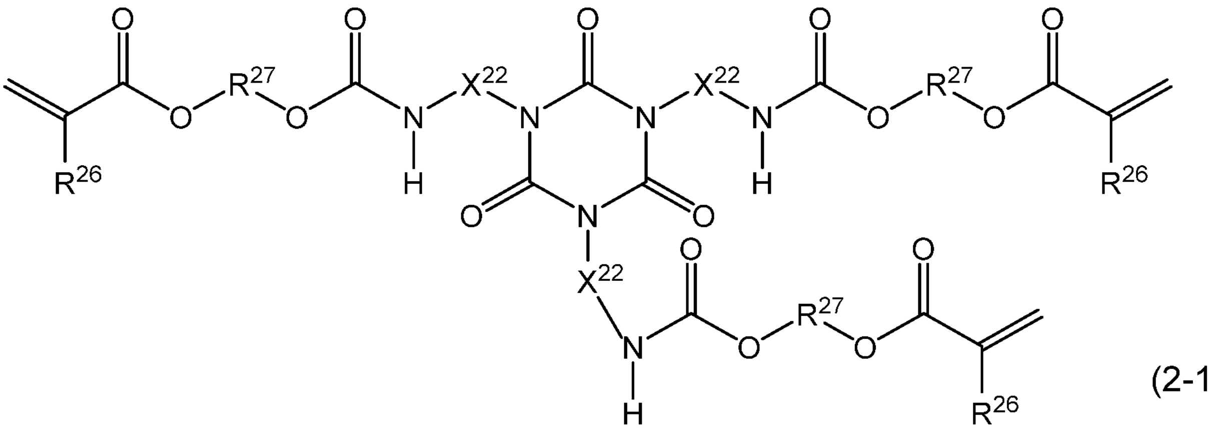

(2-1)

[Chem. 15]

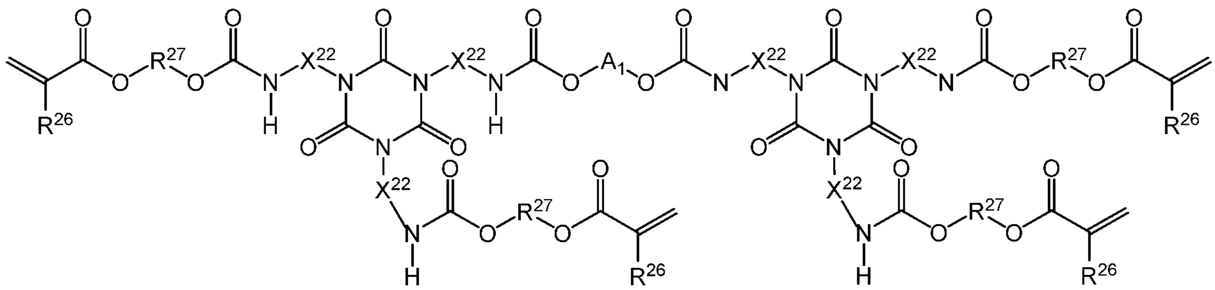

(2-2)

[Chem. 16]

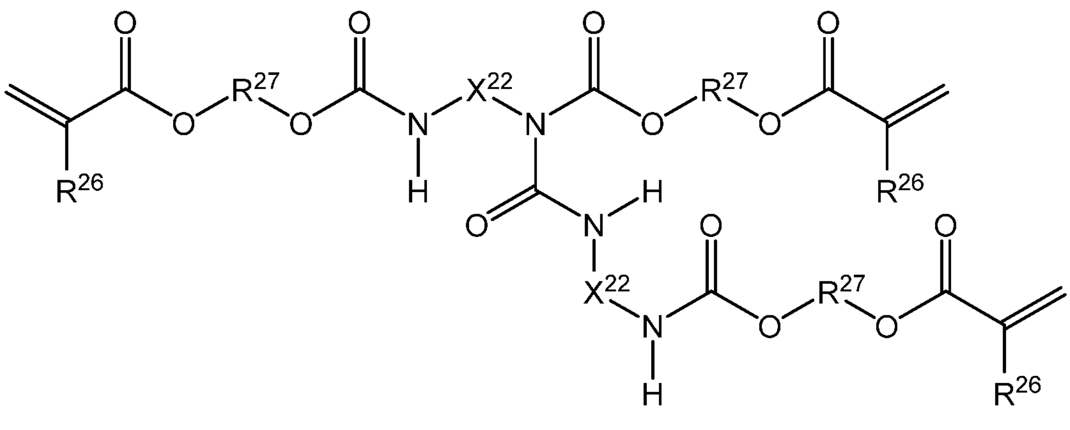

(2-3)

[Chem. 17]

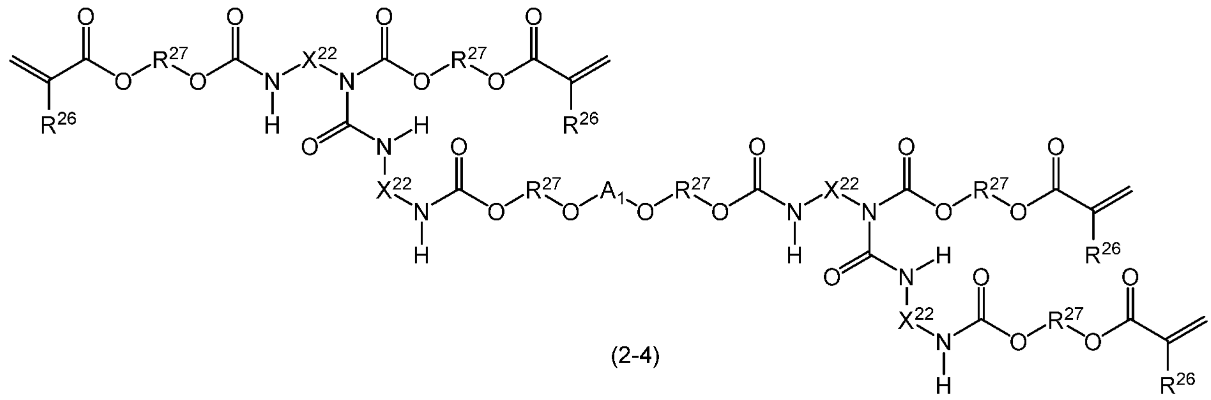

(2-4)

In the formulae (2-1) to (2-4), each $R^{26}$ is independently a hydrogen atom or a methyl group.

In the formulae (2-1) to (2-4), each $R^{27}$ is independently an alkylene group having 2 to 10 carbon atoms (preferably having 2 to 4 carbon atoms), $R^A$-(O-CO-$(CH_2)_5)_n$-, or $R^A$-(O-$(CH_2)_4)_n$-.

$R^A$ represents an alkylene group, preferably an alkylene group having 2 to 4 carbon atoms.

Each n independently represents an integer of 1 to 10, preferably an integer of 1 to 5.

In the formulae (2-1) to (2-4), each $X^{22}$ is independently an alkylene group having 2 to 17 carbon atoms, preferably an alkylene group having 2 to 10 carbon atoms, more preferably an alkylene group having 2 to 6 carbon atoms.

In the formulae (2-2) and (2-4), $A_1$ is a structure obtained by removing a hydroxyl group from an end of an alkylene diol, a caprolactone-modified diol, or polytetramethylene glycol, and is the same as mentioned above in connection with $L^{21}$ and $L^{22}$.

A plurality of $R^{26}$'s, $R^{27}$'s, and $X^{22}$'s in the formulae (2-1) to (2-4) may be the same or different.

With respect to the component (B), the compounds may be used individually or in combination of one or two types thereof. Particularly, in view of achieving excellent balance between the various properties, it is preferred that two or more compounds of the component (B) are used in combination.

When two or more compounds of the component (B) are used, it is preferred that the component (B) comprises a component (B-1) and a component (B-2). The component (B-1) is, for example, a compound of the formula (2-1) or (2-3) wherein at least one $R^{27}$ is $R^A$-(O-CO-$(CH_2)_5)_n$- or $R^A$-(O-$(CH_2)_4)_n$-, or a compound of the formula (2-2) or (2-4) wherein $A_1$ has a structure obtained by removing a hydroxyl group from an end of polytetramethylene glycol or polycaprolactone diol. The component (B-2) is, for example, a compound of the formula (2-1) or (2-3) wherein $R^{27}$ is an alkylene group, or a compound of the formula (2-2) or (2-4) wherein $A_1$ has a structure obtained by removing a hydroxyl group from an end of an alkylene diol.

Especially, a combination of the component (B-1) represented by the formula (2-1) and the component (B-2) represented by the formula (2-1) or (2-3), or a combination of the component (B-1) represented by the formula (2-2) wherein A1 has a polycaprolactone structure and the component (B-2) represented by the formula (2-1) or (2-3) is preferred.

When the component (B) contains the component (B-1) and component (B-2), the amount of the contained component (B-1) is preferably 9 to 90% by mass, more preferably 20 to 70% by mass, further preferably 30 to 60% by mass, especially preferably 45 to 60% by mass, based on the total mass of the solids contained in the components (A) to (C) (100% by mass). Further, the amount of the contained component (B-2) is preferably 5 to 60% by mass, more preferably 10 to 50% by mass, further preferably 15 to 40% by mass, especially preferably 20 to 30% by mass, based on the total mass of the solids contained in the components (A) to (C) (100% by mass).

The amount of the contained component (B) (or the total of the compounds of the component (B)) is preferably 14 to 98% by mass, more preferably 30 to 95% by mass, further preferably 45 to 93% by mass, especially preferably 60 to 90% by mass, most preferably 70 to 85% by mass, based on the total mass of the solids contained in the components (A) to (C) (100% by mass). When the amount of the contained component (B) is the above-mentioned lower limit or more, the weathering resistance is improved, and, when the amount of the contained component (B) is the above-mentioned upper limit or less, the wear resistance is improved.

[Component (C)]

The component (C) is a compound having 6 or more (meth)acryloyl groups per molecule, and the coating composition contains the component (C) and therefore a cured film obtained from the coating composition is improved in the wear resistance and chemical resistance.

With respect to the component (C), there is no particular limitation as long as it is a compound having 6 or more (meth)acryloyl groups per molecule, and examples of such compounds include polyfunctional (meth)acrylates, such as dipentaerythritol hexa(meth)acrylate, tripentaerythritol hepta(meth)acrylate, tripentaerythritol octa(meth)acrylate, and polypentaerythritol poly(meth)acrylate; and urethane (meth)acrylate obtained by reacting an isocyanate compound and (a)an (meth)acrylate compound.

The polyfunctional (meth)acrylate as the component (C) is preferably a compound represented by the following formula (3-0).

[Chem. 18]

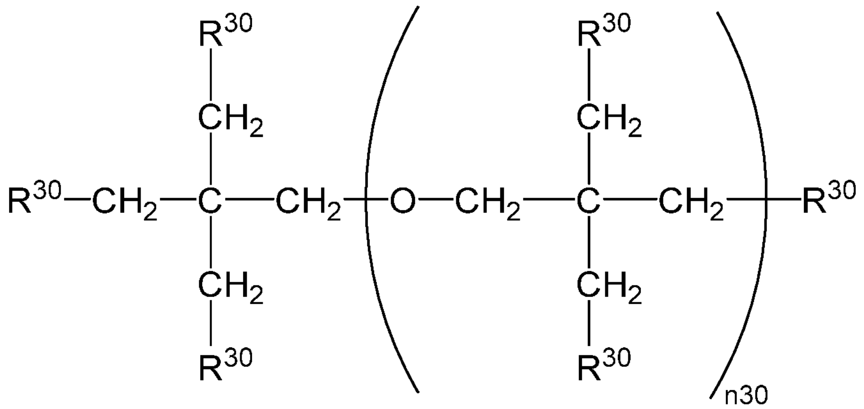

(3-0)

In the formula (3-0), among the $R^{30}$'s, at least six $R^{30}$'s represent $CH_2=CR^B-COO-$, and the remaining $R^{30}$ or $R^{30}$'s represent a hydroxyl group or $CH_2=CR^B-COO-$.

$R^B$ represents a hydrogen atom or a methyl group, and, when $R^B$ is a hydrogen atom, the polymerizable unsaturated group is an acryloyl group, or, when $R^B$ is a methyl group, the polymerizable unsaturated group is a methacryloyl group.

That is, the compound (3-0) is a polymerizable compound having a pentaerythritol skeleton and having in the structure 6 or more (meth)acryloyloxy groups which are a polymerizable unsaturated group. By virtue of having 3 or more polymerizable unsaturated groups, the cured product of the composition has an increased crosslinking density, and thus can be improved in the wear resistance and chemical resistance.

n30 represents an integer of 1 to 4, preferably an integer of 1 to 3, more preferably 1 or 2, and it is especially preferred that n30 is 1 and the compound (3-0) is a dipentaerythritol skeleton.

With respect to the compound (3-0), the compounds may be used individually or in combination of two or more types thereof.

The urethane (meth)acrylate as the component (C) can be obtained by reacting (a)an (meth)acrylate compound having a hydroxyl group and an isocyanate compound.

The (meth)acrylate compound having a hydroxyl group used in the production of urethane (meth)acrylate is preferably a compound represented by the formula (3-1) or (3-2) below.

In the formulae below, each of $R^{31}$ and $R^{32}$ independently represents a hydrogen atom or a methyl group, and a plurality of $R^{31}$'s and $R^{32}$'s in the formula may be the same or different.

[Chem. 19]

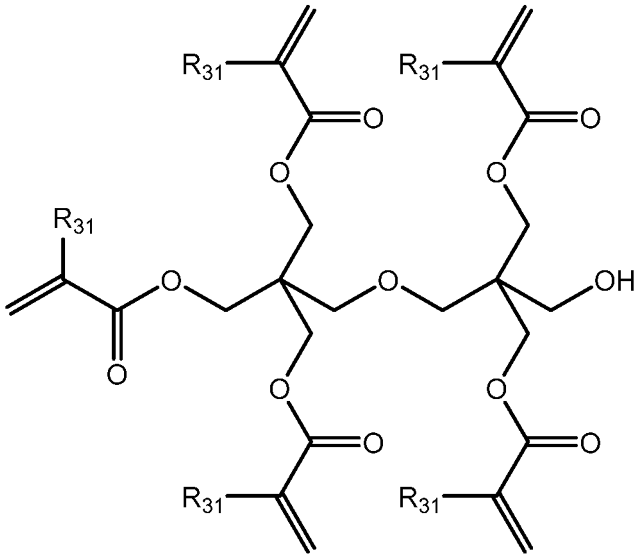

(3-1)

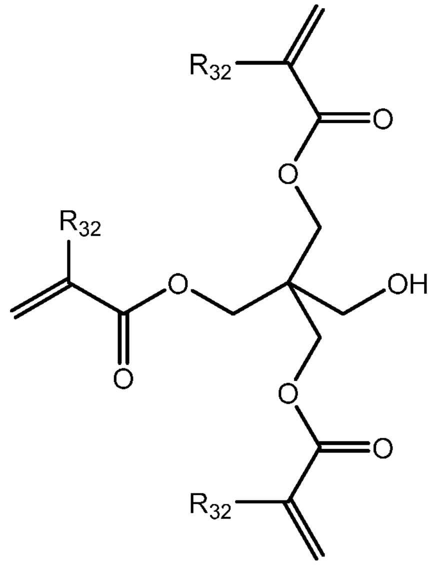

(3-2)

Further, the isocyanate compound used in the production of urethane (meth)acrylate is preferably an aliphatic polyisocyanate or alicyclic polyisocyanate having two or more isocyanate groups.

Specific examples of such polyisocyanates include aliphatic polyisocyanates, such as 1,4-butane diisocyanate, 1,5-pentane diisocyanate, 1,6-hexamethylene diisocyanate, 2,2,4-trimethylhexamethylene diisocyanate, 2,4,4-trimethylhexamethylene diisocyanate, lysine diisocyanate, and lysine triisocyanate, and a dimer and trimer thereof; and alicyclic polyisocyanates, such as norbornane diisocyanate, isophorone diisocyanate, methylenebis(4-cyclohexyl isocyanate), 1,3-bis(isocyanatomethyl)cyclohexane, hydrogenated xylylene diisocyanate, 2-methyl-1,3-diisocyanatocyclohexane, and 2-methyl-1,5-diisocyanatocyclohexane, and a dimer and trimer thereof.

Particularly, the isocyanate compound is especially preferably a triisocyanate compound represented by the following formula (3-3) or a diisocyanate compound represented by the following formula (3-4).

[Chem. 20]

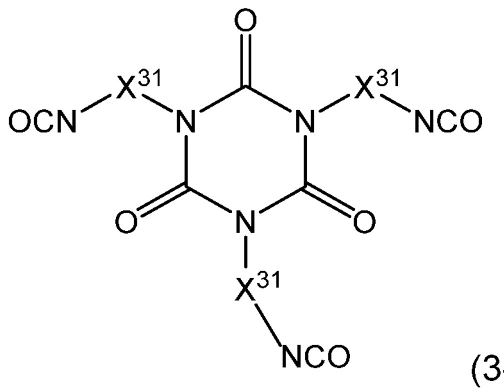

(3-3)

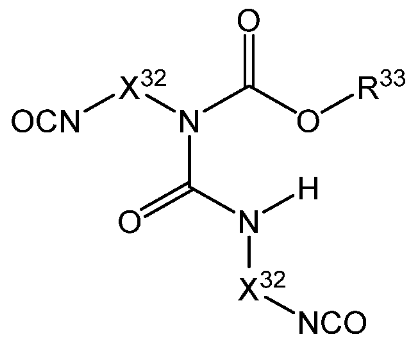

(3-4)

In the formulae, each of $X^{31}$ and $X^{32}$ independently represents an alkylene group having 2 to 17 carbon atoms, preferably an alkylene group having 2 to 6 carbon atoms. A plurality of $X^{31}$'s and $X^{32}$'s in the formula may be the same or different.

$R^{33}$ represents $-R^C-O-CO-CH=CH_2$, or a structure obtained by removing a hydroxyl group from the compound represented by the formula (3-1) or (3-2), wherein $R^C$ represents an alkylene group, and the alkylene group preferably has 1 to 30 carbon atoms, more preferably 1 to 20 carbon atoms, especially preferably 1 to 10 carbon atoms.

The amount of the contained component (C) (or the total of the compounds of the component (C)) is preferably 1.0 to 20% by mass, more preferably 2.5 to 17.5% by mass, further preferably 5.0 to 15% by mass, especially preferably 5.5 to

13% by mass, based on the total mass of the solids contained in the components (A) to (C) (100% by mass). When the amount of the contained component (C) is the above-mentioned lower limit or more, the chemical resistance is improved, and, when the amount of the contained component (C) is the above-mentioned upper limit or less, the weathering resistance is improved.

[Additional component]

The composition of the invention can optionally contain an additional component other than the components (A) to (C) in such an amount that the effects of the invention can be obtained.

Examples of additional components include a reactive compound, an organic solvent, various types of resins, a filler, a polymerization initiator, a stabilizer, an ultraviolet light absorber, and a leveling agent. In addition, the composition of the invention may further contain an inorganic pigment, an organic pigment, a loading pigment, clay mineral, a wax, a catalyst, a surfactant, a flow modifier, a coupling agent, a dye, a rheology control agent, an antioxidant, a plasticizer, or the like.

With respect to the reactive compound, (a)an (meth)acrylate compound other than the components (A) to (C) or a compound having a double bond, such as a vinyl group, can be incorporated into the composition. Examples of the (meth) acryloyl compounds include monofunctional (meth)acrylates and di-, tri-, tetra-, or penta-functional (meth)acrylates, which are other than the components (A) to (C).

Examples of monofunctional (meth)acrylates include alkyl (meth)acrylates having an alkyl group having 1 to 22 carbon atoms, such as methyl (meth)acrylate, ethyl (meth)acrylate, n-propyl (meth)acrylate, n-butyl (meth)acrylate, isobutyl (meth)acrylate, tert-butyl (meth)acrylate, 2-ethylhexyl (meth)acrylate, and lauryl (meth)acrylate; cycloalkyl (meth) acrylates, such as cyclohexyl (meth)acrylate and isobornyl (meth)acrylate; ω-alkoxyalkyl (meth)acrylates, such as 2-methoxyethyl (meth)acrylate and 4-methoxybutyl (meth)acrylate; and

hydroxyethyl (meth)acrylate, hydroxypropyl (meth)acrylate, hydroxybutyl (meth)acrylate, caprolactone-modified hydroxy(meth)acrylate (for example, trade name "Placcel", manufactured by Dicel Chemical Industries, Ltd.), polycarbonate-modified hydroxy(meth)acrylate, a mono(meth)acrylate of a polyester diol obtained from phthalic acid and propylene glycol, a mono(meth)acrylate of a polyester diol obtained from succinic acid and propylene glycol, polyethylene glycol mono(meth)acrylate, polypropylene glycol mono(meth)acrylate, 2-hydroxy-3-(meth)acryloyloxypropyl (meth)acrylate, and (meth)acrylic acid addition products of various epoxy esters.

Examples of di-, tri-, tetra-, or penta-functional (meth)acrylates include di(meth)acrylates of a dihydric alcohol, such as 1,4-butanediol di(meth)acrylate, 3-methyl-1,5-pentanediol di(meth)acrylate, 1,6-hexanediol di(meth)acrylate, 1,9-nonanediol di(meth)acrylate, neopentyl glycol di(meth)acrylate, 2-methyl-1,8-octanediol di(meth)acrylate, 2-butyl-2-ethyl-1,3-propanediol di(meth)acrylate, tricyclodecanedimethanol di(meth)acrylate, ethylene glycol di(meth)acrylate, diethylene glycol di(meth)acrylate, triethylene glycol di(meth)acrylate, dipropylene glycol di(meth)acrylate, and tripropylene glycol di(meth)acrylate; and

polyethylene glycol di(meth)acrylate, polypropylene glycol di(meth)acrylate, pentaerythritol tri(meth)acrylate, pentaerythritol tetra(meth)acrylate, dipentaerythritol penta(meth)acrylate, a di(meth)acrylate of tris(2-hydroxyethyl) isocyanurate, a di(meth)acrylate of a diol obtained by addition of 4 mol or more of ethylene oxide or propylene oxide to 1 mol of neopentyl glycol, a di(meth)acrylate of a diol obtained by addition of 2 mol of ethylene oxide or propylene oxide to 1 mol of bisphenol A, a di(meth)acrylate or tri(meth)acrylate obtained by a reaction of 2 to 3 mol of acrylic acid to 1 mol of tris(2-hydroxyethyl) isocyanurate, trimethylolpropane tri(meth)acrylate, polyethylene glycol di(meth)acrylate modified with ethylene oxide, polypropylene glycol di(meth)acrylate modified with propylene oxide, polytetramethylene glycol di(meth)acrylate modified with tetramethylene oxide, glycerol tri(meth)acrylate modified with ethylene oxide, glycerol tri(meth)acrylate modified with propylene oxide, ditrimethylolpropane tetra(meth)acrylate, hydroxypivalic acid-modified trimethylolpropane tri(meth)acrylate, trimethylolpropane tri(meth)acrylate modified with ethylene oxide, trimethylolpropane tri(meth)acrylate modified with propylene oxide, phosphoric acid tri(meth)acrylate modified with ethylene oxide, pentaerythritol tetra(meth)acrylate modified with ethylene oxide, pentaerythritol tetra(meth)acrylate modified with propylene oxide, pentaerythritol tetra(meth)acrylate modified with tetraethylene oxide, a polyester (meth)acrylate compound synthesized by a condensation reaction of a polyhydric alcohol and (meth)acrylic acid and a polyfunctional carboxylic acid, an epoxy (meth)acrylate compound synthesized by an addition reaction of a novolak epoxy resin and a glycidyl group-containing acrylic polymer and (meth)acrylic acid, and an acryl acrylate compound.

The reactive compounds may be used individually or in combination of one or two types thereof. The amount of the reactive compound used is preferably 0 to 300% by mass, based on the total mass of the solids contained in the components (A) to (C) (100% by mass).

Examples of organic solvents include an ester solvent, a ketone solvent, an ether solvent, an aliphatic solvent, an aromatic solvent, and an alcohol solvent.

Specific examples of organic solvents include ester solvents, such as ethyl acetate, propyl acetate, and butyl acetate; ketone solvents, such as acetone, 2-butanone, methyl ethyl ketone, and methyl isobutyl ketone; ether solvents,

such as tetrahydrofuran and dioxolane; aliphatic solvents, such as hexane and cyclohexane; aromatic solvents, such as toluene and xylene; and alcohol solvents, such as ethanol, methanol, propanol, butanol, and propylene glycol monomethyl ether.

Further, the composition of the invention can be in the form of a solventless composition which does not contain an organic solvent, or in the form of a high solids-content (high solids) composition which has a relatively small organic solvent content. When the composition is solventless or has a low solvent content or a high solids content, the amount of the volatile organic compound (VOC) used can be reduced, and thus a lowered burden on the environment can be achieved. Here, the term "high solids-content composition" means, for example, a composition having an organic solvent content of 30% by mass or less, based on the total mass of the composition.

Further, a liquid organic polymer can be used for modifying the viscosity of the composition. The liquid organic polymer is a liquid organic polymer that does not directly participate in a curing reaction of the composition, and examples of liquid organic polymers include a carboxyl group-containing polymer modification product (FLOWLEN G-900, NC-500: Kyoeisha Chemical Co., Ltd.), an acrylic polymer (FLOWLEN WK-20: Kyoeisha Chemical Co., Ltd.), an amine salt of a specially modified phosphate (HIPLAAD ED-251: Kusumoto Chemicals Ltd.), and a modified acryl block copolymer (DISPERBYK 2000; BYK-Chemie GmbH).

With respect to the resin, a thermosetting resin or a thermoplastic resin can be used.

The thermosetting resin is a resin having such properties that the resin can be changed to be substantially insoluble and infusible when being cured by heating or radiation, or using a means, such as a catalyst. Specific examples of thermosetting resins include a phenolic resin, a urea resin, a melamine resin, a benzoguanamine resin, an alkyd resin, an unsaturated polyester resin, a vinyl ester resin, a diallyl terephthalate resin, an epoxy resin, a silicone resin, a urethane resin, a furan resin, a ketone resin, a xylene resin, a thermosetting polyimide resin, a benzoxazine resin, an active ester resin, an aniline resin, a cyanate ester resin, and a styrene-maleic anhydride (SMA) resin. These thermosetting resins can be used individually or in combination of two or more types thereof.

The thermoplastic resin is a resin which can be melt-molded by heating. Specific examples of thermoplastic resins include a polyethylene resin, a polypropylene resin, a polystyrene resin, a rubber modified polystyrene resin, an acrylonitrile-butadiene-styrene (ABS) resin, an acrylonitrile-styrene (AS) resin, a polymethyl methacrylate resin, an acrylic resin, a polyvinyl chloride resin, a polyvinylidene chloride resin, a polyethylene terephthalate resin, an ethylene-vinyl alcohol resin, a cellulose acetate resin, an ionomer resin, a polyacrylonitrile resin, a polyamide resin, a polyacetal resin, a polybutylene terephthalate resin, a polylactic acid resin, a polyphenylene ether resin, a modified polyphenylene ether resin, a polycarbonate resin, a polysulfone resin, a polyphenylene sulfide resin, a polyether imide resin, a polyether sulfone resin, a polyarylate resin, a thermoplastic polyimide resin, a polyamide-imide resin, a polyether ether ketone resin, a polyketone resin, a liquid crystal polyester resin, a fluororesin, a syndiotactic polystyrene resin, and a cyclic polyolefin resin. These thermoplastic resins can be used individually or in combination of two or more types thereof.

With respect to the filler, for example, for the purpose of improving the wear resistance, silica can be incorporated into the composition.

With respect to the silica, there is no particular limitation, and known silica fine particles, such as silica in a powder form, colloidal silica, or nanosilica, can be used. Examples of commercially available powder-form silica fine particles include Aerosil 50, 200, manufactured by Nippon Aerosil Co., Ltd.; Sildex H31, H32, H51, H52, H121, H122, manufactured by AGC Inc.; E220A, E220, manufactured by Nippon Silica Industrial Co.; SYLYSIA 470, manufactured by Fuji Silysia Chemical Ltd.; and SG Flake, manufactured by Nippon Sheet Glass Co., Ltd.

Further, examples of commercially available colloidal silica include methanol silica sol, IPA-ST, MEK-ST, PGM-ST, NBA-ST, XBA-ST, DMAC-ST, ST-UP, ST-OUP, ST-20, ST-40, ST-C, ST-N, ST-O, ST-50, ST-OL, manufactured by Nissan Chemical Corporation.

With respect to the silica, reactive silica may be used. As reactive silica, for example, there can be mentioned reactive compound-modified silica. Examples of reactive compounds include a reactive silane coupling agent having a hydrophobic group, a compound having (a)an (meth)acryloyl group, a compound having a maleimide group, and a compound having a glycidyl group.

As examples of commercially available powder-form silica modified with a compound having (a)an (meth) acryloyl group, there can be mentioned Aerosil RM50, R711, manufactured by Nippon Aerosil Co., Ltd., and, as examples of commercially available colloidal silica modified with a compound having (a)an (meth)acryloyl group, there can be mentioned MIBK-SD, MIBK-SD-L, MIBK-AC-2140Z, MEK-AC-2140Z, manufactured by Nissan Chemical Corporation. Further examples of reactive silica include silica which is obtained by modification with a glycidyl group and then an addition reaction of acrylic acid thereto, such as 3-glycidoxypropyltrimethoxysilane, and silica modified with a urethane-forming reaction product of 3-isocyanatopropyltriethoxysilane and a compound having a hydroxyl group and (a)an (meth) acryloyl group.

With respect to the form of the silica fine particles, there is no particular limitation, and silica particles in a spherical form, a hollow form, a porous form, a rod form, a plate form, a fiber form, or an indefinite form can be used. For example, as commercially available hollow silica fine particles, SiliNax, manufactured by Nittetsu Mining Co., Ltd., can be used.

Further, the primary particle diameter of the silica particles is preferably in the range of from 5 to 200 nm. When the primary particle diameter of the silica particles is 5 nm or more, dispersion of inorganic fine particles in the composition is satisfactory, and, when the primary particle diameter of the silica particles is 200 nm or less, a satisfactory strength of the cured product can be maintained.

The amount of the silica incorporated is preferably 3 to 60% by mass, based on the mass of the composition (100% by mass).

Examples of fillers other than silica include an inorganic filler and an organic filler. With respect to the form of the filler, there is no particular limitation, and examples include fillers in a particulate form, in a plate form, or in a fiber form.

Examples of fillers having excellent heat resistance include alumina, magnesia, titania, and zirconia; examples of fillers having excellent thermal conductivity include boron nitride, aluminum nitride, alumina oxide, titanium oxide, magnesium oxide, zinc oxide, and silicon oxide; examples of fillers having excellent electrical conductivity include a metal filler and/or a metal-coated filler using a metal single substance or an alloy (for example, iron, copper, magnesium, aluminum, gold, silver, platinum, zinc, manganese, or stainless steel); examples of fillers having excellent barrier properties include minerals, such as mica, clay, kaolin, talc, zeolite, wollastonite, and smectite, and potassium titanate, magnesium sulfate, sepiolite, zonolite, aluminum borate, calcium carbonate, titanium oxide, barium sulfate, zinc oxide, and magnesium hydroxide; examples of fillers having high refractive index include barium titanate, zirconia oxide, and titanium oxide; examples of fillers exhibiting photocatalytic activity include photocatalyst metals, such as titanium, cerium, zinc, copper, aluminum, tin, indium, phosphorus, carbon, sulfur, ruthenium, nickel, iron, cobalt, silver, molybdenum, strontium, chromium, barium, and lead, and composites of the above metal, and oxides thereof; examples of fillers having excellent wear resistance include metals such as alumina, zirconia, and magnesium oxide, and composites thereof, and oxides thereof; examples of fillers having excellent electrical conductivity include metals, such as silver and copper, tin oxide, and indium oxide; and examples of fillers having excellent ultraviolet light screen include titanium oxide and zinc oxide. These inorganic fine particles may be appropriately selected according to the use of the composition, and a single type of inorganic fine particles may be used, or two or more types of inorganic fine particles may be used in combination. Further, the inorganic fine particles have various properties other than the properties mentioned above as examples, and thus may be appropriately selected according to the use of the composition.

Examples of inorganic fibers include inorganic fibers, such as a carbon fiber, a glass fiber, a boron fiber, an alumina fiber, and a silicon carbide fiber, an activated carbon fiber, a graphite fiber, a tungsten carbide fiber, a ceramic fiber, a natural fiber, a mineral fiber, such as basalt, a boron nitride fiber, a boron carbide fiber, and a metal fiber. Examples of the metal fibers include an aluminum fiber, a copper fiber, a brass fiber, a stainless steel fiber, and a steel fiber.

Examples of organic fibers include synthetic fibers formed from a resin material, such as polybenzazole, aramid, PBO (polyparaphenylenebenzoxazole), polyphenylene sulfide, polyester, acryl, polyamide, polyolefin, polyvinyl alcohol, or polyarylate; natural fibers, such as cellulose, pulp, cotton, wool, and silk; and regenerated fibers, such as a protein, a polypeptide, and alginic acid.

The amount of the filler incorporated is preferably 3 to 60% by mass, based on the mass of the composition (100% by mass).

In curing the composition of the invention using an active energy ray, a polymerization initiator, particularly a photopolymerization initiator is preferably used in the composition. As a photopolymerization initiator, one which has been conventionally known can be used, and, for example, at least one member selected from the group consisting of an acetophenone, a benzyl ketal, and a benzophenone can be preferably used.

Specific examples of photopolymerization initiators include acetophenone compounds, such as 2,2-dimethoxy-1,2-diphenylethan-1-one, 1-hydroxycyclohexyl phenyl ketone, 2-hydroxy-2-methyl-1-phenyl-propan-1-one, 1-[4-(2-hydroxyethoxy)-phenyl]-2-hydroxy-2-methyl-1-propan-1-one, 2-methyl-1-[4-(methylthio)phenyl]-2-morpholinopropan-1-one, 2-benzyl-2-dimethylamino-1-(4-morpholinophenyl)-butan-1-one, diethoxyacetophenone, oligo{2-hydroxy-2-methyl-1-[4-(1-methylvinyl)phenyl]propanone}, and 2-hydroxy-1-{4-[4-(2-hydroxy-2-methylpropionyl)benzyl]phenyl}-2-methyl-propan-1-one; benzophenone compounds, such as benzophenone, 4-phenylbenzophenone, 2,4,6-trimethylbenzophenone, and 4-benzoyl-4'-methyl-diphenyl sulfide; $\alpha$-ketoester compounds, such as methylbenzoyl formate, a 2-(2-oxo-2-phenylacetoxyethoxy)ethyl ester of oxyphenylacetic acid, and a 2-(2-hydroxyethoxy)ethyl ester of oxyphenylacetic acid; phosphine oxide compounds, such as 2,4,6-trimethylbenzoyldiphenylphosphine oxide, bis(2,4,6-trimethylbenzoyl)phenylphosphine oxide, and bis(2,6-dimethoxybenzoyl)-2,4,4-trimethylpentylphosphine oxide; benzoin compounds, such as benzoin, benzoin methyl ether, benzoin ethyl ether, benzoin isopropyl ether, and benzoin isobutyl ether; titanocene compounds; acetophenone/benzophenone hybrid photoinitiators, such as 1-[4-(4-benzoylphenylsulfunyl)phenyl]-2-methyl-2-(4-methylphenylsulfinyl)propan-1-one; oxime ester photopolymerization initiators, such as 2-(O-benzoyloxime)-1-[4-(phenylthio)]-1,2-octanedione; and camphorquinone.

The photopolymerization initiators may be used individually or in combination of two or more types thereof. The amount of the photopolymerization initiator used is preferably 1 to 15% by mass, more preferably 2 to 10% by mass, based on the mass of the composition (100% by mass).

In the composition of the invention, for the purpose of improving the weathering resistance, an ultraviolet light

absorber can be incorporated into the composition. With respect to the ultraviolet light absorber, various types of compounds or substances can be used.

Specific examples of ultraviolet light absorbers include benzotriazine ultraviolet light absorbers, such as 2-[4-[(2-hydroxy-3-dodecyloxypropyl)oxy]-2-hydroxy-phenyl]-4,6-bis(2,4-dimethylphenyl)-1,3,5-triazine, 2-[4-[(2-hydroxy-3-tridecyloxypropyl)oxy]-2-hydroxy-phenyl]-4,6-bis(2,4-dimethylphenyl)-1,3,5-triazine, 2-[4-[(2-hydroxy-3-(2-ethyl-hexyloxy)propyl)oxy]-2-hydroxy-phenyl]-4,6-bis(2,4-dimethylphenyl)-1,3,5-triazine, 2,4-bis(2-hydroxy-4-butyloxyphenyl)-6-(2,4-bis-butyloxyphenyl)-1,3,5-triazine, and 2-(2-hydroxy-4-[1-octyloxycarbonylethoxy]phenyl)-4,6-bis(4-phenylphenyl)-1,3,5-triazine; benzotriazole ultraviolet light absorbers, such as 2-(2H-benzotriazol-2-yl)-4,6-bis(1-methyl-1-phenylethyl)phenol, 2-(2-hydroxy-5-tert-butylphenyl)-2H-benzotriazole, and 2-[2-hydroxy-5-(2-(meth)acryloyloxyethyl) phenyl]-2H-benzotriazole; benzophenone ultraviolet light absorbers, such as 2,4-dihydroxybenzophenone and 2-hydroxy-4-methoxybenzophenone; cyano acrylate ultraviolet light absorbers, such as ethyl-2-cyano-3,3-diphenyl acrylate and octyl-2-cyano-3,3-diphenyl acrylate; and inorganic fine particles capable of absorbing an ultraviolet light, such as titanium oxide fine particles, zinc oxide fine particles, and tin oxide fine particles. The above-mentioned ultraviolet light absorbers may be used individually or in combination of two or more types thereof.

With respect to the ultraviolet light absorber, a commercially available product can be used. As a commercially available ultraviolet light absorber, there can be used TINUVIN PS, TINUVIN 99-2, TINUVIN 234, TINUVIN 326, TINUVIN 329, TINUVIN 900, TINUVIN 928, TINUVIN 360, TINUVIN 384-2, TINUVIN 400, TINUVIN 405, TINUVIN 460, TINUVIN 477, TINUVIN 479 (each of which is manufactured by BASF AG); ADK STAB LA-46, ADK STAB LA-F70, ADK STAB LA-29, ADK STAB LA-31G, ADK STAB LA-32, ADK STAB LA-36 (each of which is manufactured by ADEKA Corporation); and RUVA-93 (manufactured by Otsuka Chemical Co., Ltd.).

From the viewpoint of improving the weathering resistance, preferred is a benzotriazine ultraviolet light absorber or an ultraviolet light absorber having (a)an (meth)acryloyl group. Preferred are TINUVIN 400, TINUVIN 405, TINUVIN 479 (each of which is manufactured by BASF AG); ADK STAB LA-46 (manufactured by ADEKA Corporation), and RUVA-93 (manufactured by Otsuka Chemical Co., Ltd.).

The amount of the ultraviolet light absorber used is preferably 0.5 to 20% by mass, more preferably 1 to 10% by mass, based on the mass of the composition (100% by mass).

In the composition of the invention, for the purpose of improving the weathering resistance, a hindered amine light stabilizer (HALS) can be incorporated into the composition.

With respect to the hindered amine light stabilizer, a known hindered amine light stabilizer can be used, and specific examples of hindered amine light stabilizers include bis(2,2,6,6-tetramethyl-4-piperidyl) sebacate, bis(1,2,2,6,6-pentamethyl-4-piperidyl) sebacate, bis(1-methoxy-2,2,6,6-tetramethyl-4-piperidyl) sebacate, bis(1-ethoxy-2,2,6,6-tetramethyl-4-piperidyl) sebacate, bis(1-propoxy-2,2,6,6-tetramethyl-4-piperidyl) sebacate, bis(1-butoxy-2,2,6,6-tetramethyl-4-piperidyl) sebacate, bis(1-pentyloxy-2,2,6,6-tetramethyl-4-piperidyl) sebacate, bis(1-hexyloxy-2,2,6,6-tetramethyl-4-piperidyl) sebacate, bis(1-heptyloxy-2,2,6,6-tetramethyl-4-piperidyl) sebacate, bis(1-octoxy-2,2,6,6-tetramethyl-4-piperidyl) sebacate, bis(1-nonyloxy-2,2,6,6-tetramethyl-4-piperidyl) sebacate, bis(1-decanyloxy-2,2,6,6-tetramethyl-4-piperidyl) sebacate, bis(1-dodecyloxy-2,2,6,6-tetramethyl-4-piperidyl) sebacate, bis(1,2,2,6,6-pentamethyl-4-piperidyl)-2-(4-methoxy-benzylidene)malonate, tetrakis(1,2,2,6,6-pentamethyl-4-piperidyl) 1,2,3,4-butanetetracarboxylate, tetrakis(1,2,2,6,6-pentamethyl-4-piperidyl) 1,2,3,4-butanetetracarboxylate, a condensation product of 1,2,3,4-butanetetracarboxylic acid, 1,2,2,6,6-pentamethyl-4-piperidinol, and β,β,β,β-tetramethyl-3,9-(2,4,8,10-tetraoxaspiro[5,5]) undecane)diethanol, and a condensation product of 1,2,3,4-butanetetracarboxylic acid, 2,2,6,6-pentamethyl-4-piperidinol, and β,β,β,β-tetramethyl-3,9-(2,4,8,10-tetraoxaspiro[5,5])undecane)diethanol.

With respect to the hindered amine light stabilizer, a commercially available product can be used. As a commercially available hindered amine light stabilizer, there can be used TINUVIN 123, TINUVIN 292, TINUVIN 152, TINUVIN 144, TINUVIN 622SF, TINUVIN 111FDL, TINUVIN 249 (each of which is manufactured by BASF AG); and ADK STAB LA-52, ADK STAB LA-57, ADK STAB LA-63P, ADK STAB LA-68, ADK STAB LA-72, ADK STAB LA-81, ADK STAB LA-82, ADK STAB LA-87 (each of which is manufactured by ADEKA Corporation).

From the viewpoint of improving the weathering resistance, preferred is a hindered amine light stabilizer having no (meth)acryloyl group. Preferred are TINUVIN 123, TINUVIN 152, and TINUVIN 144 (each of which is manufactured by BASF AG); and ADK STAB LA-52, ADK STAB LA-57, ADK STAB LA-63P, ADK STAB LA-68, ADK STAB LA-72, and ADK STAB LA-81 (manufactured by ADEKA Corporation). More preferred are TINUVIN 123 and TINUVIN 152 (each of which is manufactured by BASF AG); and ADK STAB LA-63P, ADK STAB LA-68, ADK STAB LA-72, and ADK STAB LA-81 (manufactured by ADEKA Corporation).

The amount of the hindered amine light stabilizer used is preferably 0.01 to 10% by mass, more preferably 0.1 to 5% by mass, based on the mass of the composition (100% by mass).

In the composition of the invention, for example, for the purpose of improving the leveling properties of the composition being applied, or for the purpose of increasing the slipperiness of a cured film obtained from the composition to improve the mar resistance, a surface modifier can be added to the composition. With respect to the surface modifier, there can be used various types of additives for modifying surface physical properties, which are commercially available in the

name of a surface control agent, a leveling agent, a slipperiness imparting agent, a stainproofness imparting agent, or the like. Of these, a silicone surface modifier and a fluorine surface modifier are preferred.

Specific examples of such surface modifiers include a silicone polymer or oligomer having a silicone chain and a polyalkylene oxide chain, a silicone polymer or oligomer having a silicone chain and a polyester chain, a fluorine polymer or oligomer having a perfluoroalkyl group and a polyalkylene oxide chain, and a fluorine polymer or oligomer having a perfluoroalkyl ether chain and a polyalkylene oxide chain. Among these polymers and oligomers, at least one member may be used. For the purpose of increasing the power of retention of slipperiness and the like, a surface modifier having (a)an (meth)acryloyl group in the molecule can be used. Specific examples of surface modifiers include EBECRYL350 (Daicel-Allnex Ltd.), BYK-333 (BYK Japan KK), BYK-377 (BYK Japan KK), BYK-378 (BYK Japan KK), BYK-UV3500 (BYK Japan KK), BYK-UV3505 (BYK Japan KK), BYK-UV3576 (BYK Japan KK), MEGAFACE RS-75 (DIC Corporation), MEGAFACE RS-76-E (DIC Corporation), MEGAFACE RS-72-K (DIC Corporation), MEGAFACE RS-76-NS (DIC Corporation), MEGAFACE RS-90 (DIC Corporation), MEGAFACE RS-91 (DIC Corporation), MEGAFACE RS-55 (DIC Corporation), OPTOOL DAC-HP (Daikin Industries, Ltd.), ZX-058-A (T&K TOKA Corporation), ZX-201 (T&K TOKA Corporation), ZX-202 (T&K TOKA Corporation), ZX-212 (T&K TOKA Corporation), ZX-214-A (T&K TOKA Corporation), X-22-164AS (Shin-Etsu Chemical Co., Ltd.), X-22-164A (Shin-Etsu Chemical Co., Ltd.), X-22-164B (Shin-Etsu Chemical Co., Ltd.), X-22-164C (Shin-Etsu Chemical Co., Ltd.), X-22-164E (Shin-Etsu Chemical Co., Ltd.), and X-22-174DX (Shin-Etsu Chemical Co., Ltd.).

The active-energy-ray-curable coating composition of the invention can be advantageously used as a film for protecting a substrate, which is a cured film obtained by applying the composition to at least one surface of a material and then irradiating the applied composition with an active energy ray. The cured film formed from the composition of the invention gas has a weathering resistance and a wear resistance as well as high chemical resistance, and exhibits excellent adhesion to various materials even in a severe environment at a high temperature and at a high humidity or the like, and therefore has excellent effects when used as a protective film for the material which is used in a severe environment, such as an outdoor environment or an environment around the automobile, for a long term.

<Molded article>

(Construction and materials)

The molded article of the invention has a cured film of the active-energy-ray-curable coating composition of the invention, and a substrate.

With respect to the substrate, there is no particular limitation, and the substrate can be appropriately selected according to the use of the molded article, and examples of substrates include a plastic, wood, a metal (such as a steel material, a stainless steel material, and aluminum), a metal oxide, paper, and silicon or modified silicon, and the substrate may be a substrate obtained by bonding together different materials, or a substrate having the composition of the invention or another composition as a primer laminated on the substrate.

With respect to the form of the substrate, there is no particular limitation, and the substrate can be in an arbitrary form according to the purpose, such as a flat plate form, a sheet form, or a three-dimensional form having a curvature (bent portion) on the entire surface or a part thereof. Further, with respect to the hardness, thickness, and the like of the substrate, there is no particular limitation.

The active-energy-ray-curable coating composition of the invention has excellent adhesion to a plastic substrate (resin substrate). As mentioned above, a resin material has disadvantages in that the resin material has such a low wear resistance that the glossiness or transparency is easily reduced, and in that the resin material has poor weathering resistance, and the disadvantages can be removed by coating the resin material with the composition of the invention.

With respect to the plastic substrate, there is no particular limitation as long as the substrate is formed from a resin, and, for example, the above-mentioned thermosetting resin or thermoplastic resin can be used. The substrate may be a substrate having incorporated a single type of a resin or two or more types of resins, or may be a substrate having a single-layer structure or a two-layer or more laminated structure. Further, the plastic substrate may be reinforced with a fiber (FRP).

When obtaining a transparent molded article, a polycarbonate resin (for example, an aliphatic polycarbonate, an aromatic polycarbonate, or an alicyclic polycarbonate), a polymethyl methacrylate resin, a polystyrene resin, or the like is preferably used as the plastic substrate.

Further, the substrate can contain a known additive, such as a known antistatic agent, anti-fogging agent, antiblocking agent, ultraviolet light absorber, antioxidant, pigment, organic filler, inorganic filler, light stabilizer, nucleating agent, or lubricant, in such an amount that the effects of the invention are not sacrificed.

The molded article of the invention may further have a second substrate on the substrate and cured film. With respect to the material for the second substrate, there is no particular limitation, and examples of the materials include wood, a metal, a metal oxide, a plastic, paper, and silicon or modified silicon, and the second substrate may be a substrate

obtained by bonding together different materials. With respect to the form of the substrate, there is no particular limitation, and the substrate can be in an arbitrary form according to the purpose, such as a flat plate form, a sheet form, or a three-dimensional form having a curvature on the entire surface or a part thereof. Further, with respect to the hardness, thickness, and the like of the substrate, there is no particular limitation.

The molded article of the invention has high adhesion to both a plastic and an inorganic material, and therefore can be advantageously used as an interlayer material for different materials. It is especially preferred that the substrate is a plastic and the second substrate is an inorganic layer. Examples of inorganic layers include quartz, sapphire, glass, an optical film, a ceramic material, an inorganic oxide, a deposited film (formed by CVD, PVD, or sputtering), a magnetic film, a reflective film, metals, such as Ni, Cu, Cr, Fe, and stainless steel, paper, SOG (Spin On Glass), SOC (Spin On Carbon), plastic layers, such as polyester, polycarbonate, and polyimide, a TFT array substrate, an electrode plate for PDP, electrically conductive substrates, such as ITO and a metal, an insulating substrate, and silicon substrates, such as silicon, silicon nitride, polysilicon, silicon oxide, and amorphous silicon.

(Method for producing the molded article)

The molded article of the invention is obtained by coating the surface of a substrate with the composition of the invention.

Coating the substrate can be conducted by a method in which the composition is directly applied to or directly molded on the substrate and cured, or by a method in which a cured product of the composition is laminated on the substrate.

When the composition is directly applied, with respect to the applying method, there is no particular limitation, and examples of methods include a spraying method, a spin coating method, a dipping method, a roll coating method, a blade coating method, a doctor roll method, a doctor blade method, a curtain coating method, a slit coating method, a screen printing method, and an inkjet method.

When the composition is directly molded, examples of molding methods include in-mold decorating, insert molding, vacuum forming, extrusion laminating, and press molding.

When a cured product of the composition is laminated, a method may be employed in which a semicured product of the composition is laminated on the substrate and then completely cured, or a method may be employed in which a completely cured product of the composition is laminated on the substrate.

The composition of the invention contains a compound having a polymerizable unsaturated group, and hence can be cured by irradiation with an active energy ray.

Examples of active energy rays include an ultraviolet light, an electron beam, and ionizing radiations, such as an $\alpha$-ray, a $\beta$-ray, and a $\gamma$-ray. Of these, particularly, in view of the curing properties and utility, an ultraviolet light (UV) is preferred.

When an ultraviolet light is used as an active energy ray, examples of apparatuses for irradiating the composition with an ultraviolet light include a low-pressure mercury lamp, a high-pressure mercury lamp, an ultra-high-pressure mercury lamp, a metal halide lamp, an electrodeless lamp (fusion lamp), a chemical lamp, a black light lamp, a mercury-xenon lamp, a short arc lamp, a helium-cadmium laser, an argon laser, sunlight, and an LED lamp. By irradiating the applied or molded composition with an ultraviolet light having a wavelength of about 180 to 400 nm using the above-mentioned apparatus, a cured film or a cured product can be obtained. The irradiation dose of an ultraviolet light is appropriately selected according to the type and amount of the photopolymerization initiator used.

Further, even after the active-energy-ray-curable coating composition is cured, the resultant cured film has excellent processability, and therefore the molded article of the invention can be subjected to bending processing, together with the substrate. For example, the coating composition is directly applied to a substrate in a flat plate form, and then the resultant film on the substrate is irradiated with an active energy ray to obtain a substrate having a cured film (i.e., a molded article which is a laminated material), and even such a substrate can be subjected to bending processing, and thus there is no need to take care to apply the coating composition to a curved substrate, and the productivity of a bending processing material can be considerably improved. In addition, the molded article of the invention has not only very excellent flexing properties upon being heated but also excellent hard coat properties after heat bending processing.

When bending processing is conducted, a film obtained by applying the composition of the invention preferably has a thickness of 0.5 to 40 $\mu$m, more preferably 3 to 35 $\mu$m, further preferably 5 to 30 $\mu$m, especially preferably 10 to 25 $\mu$m. When the thickness of the film is the above-mentioned lower limit or more, the resultant molded article can exhibit satisfactory wear resistance and weathering resistance, and, when the thickness of the film is the above-mentioned upper limit or less, the resultant molded article can achieve excellent flexing properties.

With respect to the method for bending processing, there is no particular limitation, and examples include a bending processing method of directly bending the laminated material, and processing methods, such as press molding, free blow forming, vacuum forming, pressure forming, and twin composite molding.

The temperature of heat bending processing is preferably 80°C or higher, more preferably 150°C or higher.

Further, the upper limit of the temperature can be appropriately selected as long as it is lower than the melting temperature of the substrate.

(Use)

The molded article of the invention has excellent weathering resistance, wear resistance, chemical resistance, and adhesion, and therefore can be especially advantageously used as various protecting materials. For example, the molded article of the invention can be used for building materials, houses and facilities, transports, such as automobiles, vessels, aircraft, and railway rolling stocks, electronic materials, recording materials, optical materials, lighting, packaging materials, for protecting outdoor constructions, optical fiber coating, for protecting resin glass, and the like, and can be advantageously used particularly in the automobile headlight lens application, automobile glazing application, automobile body exterior trim application, plastic building material application, or steel plate building material application.

EXAMPLES

Hereinbelow, the invention will be described in more detail with reference to the following Examples and Comparative Examples, which should not be construed as limiting the scope of the invention. Further, in the present Examples, the "part(s)" and "%" are given by mass unless otherwise specified.

(Synthesis Example 1: Synthesis of UA-1)

In a one-litter flask equipped with a stirrer, a gas introducing pipe, a condenser, and a thermometer were placed "BURNOCK DN-902S", manufactured by DIC Corporation (NCO equivalent: 23.5 wt%; 178.72 parts by mass), 2,6-di-tert-butyl-4-methylphenol (0.84 parts by mass), methoxyhydroquinone (0.084 parts by mass), and dibutyltin diacetate (0.084 parts by mass), and the temperature of the resultant mixture was increased to 70°C, and then 2-hydroxyethyl acrylate (77.4 parts by mass) and "PTMG-1000", manufactured by Mitsubishi Chemical Corporation (hydroxyl value: 113.95; 164.11 parts by mass), were charged into the flask over one hour. After charged, the resultant mixture was subjected to a reaction at 80°C until the infrared absorption spectrum at 2,250 cm-1, which is ascribed to an isocyanate group, disappeared, obtaining a urethane resin UA-1 having (a)an (meth)acryloyl group.

(Synthesis Example 2: Synthesis of UA-2)

In a one-litter flask equipped with a stirrer, a gas introducing pipe, a condenser, and a thermometer were placed "BURNOCK DN-902S", manufactured by DIC Corporation (NCO equivalent: 23.5 wt%; 178.72 parts by mass), 2,6-di-tert-butyl-4-methylphenol (0.84 parts by mass), methoxyhydroquinone (0.084 parts by mass), and dibutyltin diacetate (0.084 parts by mass), and the temperature of the resultant mixture was increased to 70°C, and then 2-hydroxyethyl acrylate (77.4 parts by mass) and "Placcel-210", manufactured by Dicel Chemical Industries, Ltd. (hydroxyl value: 113.4; 164.90 parts by mass), were charged into the flask over one hour. After charged, the resultant mixture was subjected to a reaction at 80°C until the infrared absorption spectrum at 2,250 cm-1, which is ascribed to an isocyanate group, disappeared, obtaining a urethane resin UA-2 having (a)an (meth)acryloyl group.

(Synthesis Example 3: Synthesis of UA-3)

In a one-litter flask equipped with a stirrer, a gas introducing pipe, a condenser, and a thermometer were placed "BURNOCK DN-902S", manufactured by DIC Corporation (NCO equivalent: 23.5 wt%; 178.72 parts by mass), 2,6-di-tert-butyl-4-methylphenol (1.05 parts by mass), methoxyhydroquinone (0.11 parts by mass), and dibutyltin diacetate (0.11 parts by mass), and the temperature of the resultant mixture was increased to 70°C, and then Placcel FA-2D (344.0 parts by mass) was charged into the flask over one hour. After charged, the resultant mixture was subjected to a reaction at 80°C until the infrared absorption spectrum at 2,250 cm-1, which is ascribed to an isocyanate group, disappeared, obtaining a urethane resin UA-3 having (a)an (meth)acryloyl group.

(Synthesis Example 4: Synthesis of UA-4)

In a one-litter flask equipped with a stirrer, a gas introducing pipe, a condenser, and a thermometer were placed "Basonat (registered trademark) HA 3000", manufactured by BASF AG (NCO equivalent: 19.5 wt%; 213.39 parts by mass), 2,6-di-tert-butyl-4-methylphenol (0.91 parts by mass), methoxyhydroquinone (0.09 parts by mass), and dibutyltin diacetate (0.09 parts by mass), and the temperature of the resultant mixture was increased to 70°C, and then 2-hydroxyethyl acrylate (77.4 parts by mass) and "PTMG-1000", manufactured by Mitsubishi Chemical Corporation

(hydroxyl value: 113.95; 164.11 parts by mass), were charged into the flask over one hour. After charged, the resultant mixture was subjected to reaction at 80°C until the infrared absorption spectrum at 2,250 cm-1, which is ascribed to an isocyanate group, disappeared, obtaining a urethane resin UA-4 having (a)an (meth)acryloyl group.

(Synthesis Example 5: Synthesis of UA-5)

In a one-litter flask equipped with a stirrer, a gas introducing pipe, a condenser, and a thermometer were placed "Basonat (registered trademark) HA 3000", manufactured by BASF AG (NCO equivalent: 19.5 wt%; 213.39 parts by mass), 2,6-di-tert-butyl-4-methylphenol (0.91 parts by mass), methoxyhydroquinone (0.09 parts by mass), and dibutyltin diacetate (0.09 parts by mass), and the temperature of the resultant mixture was increased to 70°C, and then 2-hydroxyethyl acrylate (77.4 parts by mass) and "Placcel-210", manufactured by Dicel Chemical Industries, Ltd. (hydroxyl value: 113.4; 164.90 parts by mass), were charged into the flask over one hour. After charged, the resultant mixture was subjected to a reaction at 80°C until the infrared absorption spectrum at 2,250 cm-1, which is ascribed to an isocyanate group, disappeared, obtaining a urethane resin UA-5 having (a)an (meth)acryloyl group.

(Synthesis Example 6: Synthesis of UA-6)

In a one-litter flask equipped with a stirrer, a gas introducing pipe, a condenser, and a thermometer were placed "Basonat (registered trademark) HA 3000", manufactured by BASF AG (NCO equivalent: 19.5 wt%; 213.39 parts by mass), 2,6-di-tert-butyl-4-methylphenol (1.12 parts by mass), methoxyhydroquinone (0.11 parts by mass), and dibutyltin diacetate (0.11 parts by mass), and the temperature of the resultant mixture was increased to 70°C, and then Placcel FA-2D (344.0 parts by mass) was charged into the flask over one hour. After charged, the resultant mixture was subjected to a reaction at 80°C until the infrared absorption spectrum at 2,250 cm-1, which is ascribed to an isocyanate group, disappeared, obtaining a urethane resin UA-6 having (a)an (meth)acryloyl group.

(Synthesis Example 7: Synthesis of UA-7)

In a one-litter flask equipped with a stirrer, a gas introducing pipe, a condenser, and a thermometer were placed "BURNOCK DN-902S", manufactured by DIC Corporation (NCO equivalent: 23.5 wt%; 178.72 parts by mass), 2,6-di-tert-butyl-4-methylphenol (0.59 parts by mass), methoxyhydroquinone (0.06 parts by mass), and dibutyltin diacetate (0.06 parts by mass), and the temperature of the resultant mixture was increased to 70°C, and then 2-hydroxyethyl acrylate (116.2 parts by mass) was charged into the flask over one hour. After charged, the resultant mixture was subjected to a reaction at 80°C until the infrared absorption spectrum at 2,250 cm-1, which is ascribed to an isocyanate group, disappeared, obtaining a urethane resin UA-7 having (a)an (meth)acryloyl group.

(Synthesis Example 8: Synthesis of UA-8)

In a one-litter flask equipped with a stirrer, a gas introducing pipe, a condenser, and a thermometer were placed "BURNOCK DN-902S", manufactured by DIC Corporation (NCO equivalent: 23.5 wt%; 178.72 parts by mass), 2,6-di-tert-butyl-4-methylphenol (0.51 parts by mass), methoxyhydroquinone (0.05 parts by mass), and dibutyltin diacetate (0.05 parts by mass), and the temperature of the resultant mixture was increased to 70°C, and then 2-hydroxyethyl acrylate (77.4 parts by mass) and "MPD (3-methyl-1,5-pentanediol)", manufactured by Kuraray Co., Ltd. (19.70 parts by mass), were charged into the flask over one hour. After charged, the resultant mixture was subjected to a reaction at 80°C until the infrared absorption spectrum at 2,250 cm-1, which is ascribed to an isocyanate group, disappeared, obtaining a urethane resin UA-8 having (a)an (meth)acryloyl group.

(Synthesis Example 9: Synthesis of UA-9)

In a one-litter flask equipped with a stirrer, a gas introducing pipe, a condenser, and a thermometer were placed "BURNOCK DN-902S", manufactured by DIC Corporation (NCO equivalent: 23.5 wt%; 178.72 parts by mass), 2,6-di-tert-butyl-4-methylphenol (0.65 parts by mass), methoxyhydroquinone (0.07 parts by mass), and dibutyltin diacetate (0.07 parts by mass), and the temperature of the resultant mixture was increased to 70°C, and then 4-hydroxybutyl acrylate (144.2 parts by mass) was charged into the flask over one hour. After charged, the resultant mixture was subjected to a reaction at 80°C until the infrared absorption spectrum at 2,250 cm-1, which is ascribed to an isocyanate group, disappeared, obtaining a urethane resin UA-9 having (a)an (meth)acryloyl group.

(Synthesis Example 10: Synthesis of UA-10)

In a one-litter flask equipped with a stirrer, a gas introducing pipe, a condenser, and a thermometer were placed "Basonat (registered trademark) HA 3000", manufactured by BASF AG (NCO equivalent: 19.5 wt%; 213.39 parts by mass), 2,6-di-tert-butyl-4-methylphenol (0.66 parts by mass), methoxyhydroquinone (0.07 parts by mass), and dibutyltin diacetate (0.07 parts by mass), and the temperature of the resultant mixture was increased to 70°C, and then 2-hydroxyethyl acrylate (116.2 parts by mass) was charged into the flask over one hour. After charged, the resultant mixture was subjected to a reaction at 80°C until the infrared absorption spectrum at 2,250 cm-1, which is ascribed to an isocyanate group, disappeared, obtaining a urethane resin UA-10 having (a)an (meth)acryloyl group.

(Synthesis Example 11: Synthesis of UA-11)

In a one-litter flask equipped with a stirrer, a gas introducing pipe, a condenser, and a thermometer were placed "Basonat (registered trademark) HA 3000", manufactured by BASF AG (NCO equivalent: 19.5 wt%; 213.39 parts by mass), 2,6-di-tert-butyl-4-methylphenol (0.72 parts by mass), methoxyhydroquinone (0.07 parts by mass), and dibutyltin diacetate (0.07 parts by mass), and the temperature of the resultant mixture was increased to 70°C, and then 4-hydroxybutyl acrylate (144.2 parts by mass) was charged into the flask over one hour. After charged, the resultant mixture was subjected to a reaction at 80°C until the infrared absorption spectrum at 2,250 cm-1, which is ascribed to an isocyanate group, disappeared, obtaining a urethane resin UA-11 having (a)an (meth)acryloyl group.

(Synthesis Example 12: UA-12)

In a one-litter flask equipped with a stirrer, a gas introducing pipe, a condenser, and a thermometer were placed "Desmodur I", manufactured by Covestro AG (111.15 parts by mass), 2,6-di-tert-butyl-4-methylphenol (0.94 parts by mass), methoxyhydroquinone (0.09 parts by mass), and dibutyltin diacetate (0.09 parts by mass), and the temperature of the resultant mixture was increased to 70°C, and then "ARONIX M-306 (hydroxyl value: 157.2)", manufactured by Toagosei Co., Ltd. (356.87 parts by mass), was charged into the flask over one hour. After charged, the resultant mixture was subjected to a reaction at 80°C until the infrared absorption spectrum at 2,250 cm-1, which is ascribed to an isocyanate group, disappeared, obtaining a urethane resin UA-12 having (a)an (meth)acryloyl group represented by the general formula (3).

(Synthesis Example 13: UA-13)

In a one-litter flask equipped with a stirrer, a gas introducing pipe, a condenser, and a thermometer were placed "Desmodur H", manufactured by Covestro AG (84.10 parts by mass), 2,6-di-tert-butyl-4-methylphenol (1.39 parts by mass), methoxyhydroquinone (0.14 parts by mass), and dibutyltin diacetate (0.14 parts by mass), and the temperature of the resultant mixture was increased to 70°C, and then "ARONIX M-403 (hydroxyl value: 92)", manufactured by Toagosei Co., Ltd. (609.78 parts by mass), was charged into the flask over one hour. After charged, the resultant mixture was subjected to a reaction at 80°C until the infrared absorption spectrum at 2,250 cm-1, which is ascribed to an isocyanate group, disappeared, obtaining an UA-13 having (a)an (meth)acryloyl group represented by the general formula (3).

(Synthesis Example 14: UA-14)

In a one-litter flask equipped with a stirrer, a gas introducing pipe, a condenser, and a thermometer were placed "Desmodur I", manufactured by Covestro AG (111.15 parts by mass), 2,6-di-tert-butyl-4-methylphenol (1.44 parts by mass), methoxyhydroquinone (0.14 parts by mass), and dibutyltin diacetate (0.14 parts by mass), and the temperature of the resultant mixture was increased to 70°C, and then "ARONIX M-403 (hydroxyl value: 92)", manufactured by Toagosei Co., Ltd. (609.78 parts by mass), was charged into the flask over one hour. After charged, the resultant mixture was subjected to a reaction at 80°C until the infrared absorption spectrum at 2,250 cm-1, which is ascribed to an isocyanate group, disappeared, obtaining an UA-14 having (a)an (meth)acryloyl group represented by the general formula (3).

(Synthesis Example 15: UA-15)

In a one-litter flask equipped with a stirrer, a gas introducing pipe, a condenser, and a thermometer were placed "BURNOCK DN-902S", manufactured by DIC Corporation (178.72 parts by mass), 2,6-di-tert-butyl-4-methylphenol (1.01 parts by mass), methoxyhydroquinone (0.10 parts by mass), and dibutyltin diacetate (0.10 parts by mass), and the temperature of the resultant mixture was increased to 70°C, and then "ARONIX M-306 (hydroxyl value: 157.2)", manufactured by Toagosei Co., Ltd. (356.87 parts by mass), was charged into the flask over one hour. After charged,

the resultant mixture was subjected to reaction at 80°C until the infrared absorption spectrum at 2,250 cm-1, which is ascribed to an isocyanate group, disappeared, obtaining a urethane resin UA-15 having (a)an (meth)acryloyl group represented by the general formula (3).

(Synthesis Example 16: UA-16)

In a one-litter flask equipped with a stirrer, a gas introducing pipe, a condenser, and a thermometer were placed "BURNOCK DN-902S", manufactured by DIC Corporation (178.72 parts by mass), 2,6-di-tert-butyl-4-methylphenol (1.57 parts by mass), methoxyhydroquinone (0.16 parts by mass), and dibutyltin diacetate (0.16 parts by mass), and the temperature of the resultant mixture was increased to 70°C, and then "ARONIX M-403 (hydroxyl value: 92)", manufactured by Toagosei Co., Ltd. (203.26 parts by mass), was charged into the flask over one hour. After charged, the resultant mixture was subjected to a reaction at 80°C until the infrared absorption spectrum at 2,250 cm-1, which is ascribed to an isocyanate group, disappeared, obtaining an UA-16 having (a)an (meth)acryloyl group represented by the general formula (3).

(Example 1)

1 Part by mass of 2-hydroxyethyl isocyanurate triacrylate as the component (A), 90 parts by mass of UA-4 as the component (B-1), 8 parts by mass of UA-10 as the component (B-2), 1 part by mass of UA-12 as the component (C), 3 parts by mass of Omunirad 819 (manufactured by IGM RESINS B.V) as a photoinitiator, 0.5 parts by mass of Tinuvin 123 as a HALS, 4 parts by mass of Tinuvin 479 as an ultraviolet light absorber, and propylene glycol monomethyl ether as an organic solvent in such an amount that the solids content of the resultant mixture became 50% by mass were uniformly mixed with each other to prepare an active-energy-ray-curable coating composition in Example 1.

(Examples 2 to 46 and Comparative Examples 1 to 4)

Active-energy-ray-curable coating compositions in the Examples and Comparative Examples were individually obtained in substantially the same manner as in Example 1 except that the formulation was changed to those shown in Tables 1 to 7.

[Preparation of a specimen for evaluation]

The active-energy-ray-curable coating composition in each Example was applied onto a polycarbonate substrate having a thickness of 3 mm ("Panlite L-1225ZL", manufactured by Teijin Limited) using a bar coater, and dried at 80°C for 4 minutes, and then irradiated in air using an ultraviolet light irradiation apparatus (high-pressure mercury lamp, manufactured by GS-YUASA International Ltd.) at an illuminance of 200 mW•cm$^2$ and at an irradiation dose of 1,000 mJ/m$^2$, obtaining a polycarbonate laminated material having a cured film having a thickness of 20 $\mu$m.

[Evaluation for chemical resistance]

With respect to the specimen for evaluation in each Example, using a 40 wt% aqueous solution of sulfuric acid, a spot test was conducted by a spot method in accordance with JIS K 5600-6.

The longest period of time during which no poor appearance was found in the film was obtained as an evaluation result. A specimen having a time of 15 minutes or more was acceptable, and, when no poor appearance was found even after more than 60 minutes elapsed, such a specimen was rated "60". The results (time (unit: minute)) are shown in the row of "Chemical resistance" in Tables 1 to 7.

[Evaluation for wear resistance]

A Taber abrasion test was performed by abrading the surface of the cured film in the surface of the specimen for evaluation in each Example by a method in accordance with ANSI 2007 (abrasive wheel CS-10F, 500 g, 500 times). Evaluation for wear resistance was conducted by measuring a difference between a haze of the initial state and the haze after the Taber abrasion test, i.e., a haze value change ΔHaze (%).

A haze value change between the haze values before and after the test was determined from a haze value obtained from the following formula using light transmittance values measured using a haze meter.

$$Th = Td/Tt \times 100$$

(Th: haze value (%), Td: scattered light transmittance, Tt: total light transmittance)

A specimen having a ΔHaze of less than 20 was acceptable. The ΔHaze values are shown in the row of "Wear resistance" in Tables 1 to 7.

[Evaluation A for weathering resistance]

The specimen for evaluation in each Example was subjected to an accelerated weathering resistance test (SUV test) under the following conditions.

Conditions: A cycle of irradiation (63°C, 70% RH, 4 hours) -> darkness (70°C, 90% **RH,** 4 hours) -> moisture condensation (30°C, 98% RH, 4 hours) was repeated, wherein a shower was performed before and after the irradiation.

The longest period of time during which generation of a crack was not found in the cured film was obtained as an evaluation result, and a specimen having a time of 650 hours or more was acceptable. When generation of a crack was not found even after more than 1,296 hours elapsed, such a specimen was rated "1296". The results (unit: hour) are shown in the row of "Weathering resistance A" in Tables 1 to 7.

[Evaluation B for weathering resistance]

An SUV test was conducted under the same conditions as those for the above Evaluation A for weathering resistance, and a cellophane tape adhesion test was performed every 12 hours for 1,296 hours with respect to the surface of the specimen, and then the surface state was observed and evaluated.

Evaluation of the cellophane tape adhesion test was made as follows. After the peel test, the surface state was observed, and a lapse of time from the start of the test to the time when peeling was caused was obtained as an evaluation result, and a specimen having a time lapse of 650 hours or more was acceptable. When no peeling was found even after 1,296 hours elapsed, such a specimen was rated "1296". The results (unit: hour) are shown in the row of "Weathering resistance B" in Tables 1 to 7.

[Table 1]

| | | Example | | | | | | | |
|---|---|---|---|---|---|---|---|---|---|
| | | 1 | 2 | 3 | 4 | 5 | 6 | 7 | 8 |
| (A) | A-1 | 1 | 84 | 84 | 2 | 2 | 2 | 2.5 | 3.5 |
| (B-1) | UA-1 | | | | | | | | |
| | UA-2 | | | | | | | | |
| | UA-3 | | | | | | | | |
| | UA-4 | 90 | 10 | 10 | 78 | 0 | 18 | 70 | 29 |
| | UA-5 | | | | | | | | |
| | UA-6 | | | | | | | | |
| (B-2) | UA-7 | | | | | | | | |
| | UA-8 | | | | | | | | |
| | UA-9 | | | | | | | | |
| | UA-10 | 8 | 5 | 5 | 0 | 78 | 60 | 10 | 50 |
| | UA-11 | | | | | | | | |
| (C) | DPHA | | | 1 | | | | | |
| | UA-12 | 1 | 1 | | 20 | 20 | 20 | 17.5 | 17.5 |
| | UA-13 | | | | | | | | |
| | UA-14 | | | | | | | | |
| | UA-15 | | | | | | | | |
| | UA-16 | | | | | | | | |

(continued)

| | | Example | | | | | | | |
|---|---|---|---|---|---|---|---|---|---|
| | | 1 | 2 | 3 | 4 | 5 | 6 | 7 | 8 |
| Others | I-1 | 3 | 3 | 3 | 3 | 3 | 3 | 3 | 3 |
| | H-1 | 0.5 | 0.5 | 0.5 | 0.5 | 0.5 | 0.5 | 0.5 | 0.5 |
| | UVA3 | 4 | 4 | 4 | 4 | 4 | 4 | 4 | 4 |
| Chemical resistance | | 24 | 36 | 30 | 48 | 60 | 60 | 48 | 60 |
| Wear resistance | | 18 | 11 | 12 | 15 | 12 | 12 | 11 | 9 |
| Weathering resistance A | | 720 | 672 | 660 | 672 | 672 | 672 | 816 | 816 |
| Weathering resistance B | | 864 | 864 | 864 | 672 | 650 | 672 | 960 | 960 |

[Table 2]

| | | Example | | | | | | | |
|---|---|---|---|---|---|---|---|---|---|
| | | 9 | 10 | 11 | 12 | 13 | 14 | 15 | 16 |
| (A) | A-1 | 67.5 | 67.5 | 67.5 | 5 | 15 | 50 | 12.5 | 12.5 |
| (B-1) | UA-1 | | | | | | | | |
| | UA-2 | | | | | | | | |
| | UA-3 | | | | | | | | |
| | UA-4 | 30 | 0 | 20 | 60 | 30 | 30 | 50 | 56.5 |
| | UA-5 | | | | | | | | |
| | UA-6 | | | | | | | | |
| (B-2) | UA-7 | | | | | | | | |
| | UA-8 | | | | | | | | |
| | UA-9 | | | | | | | | |
| | UA-10 | 0 | 30 | 10 | 20 | 40 | 15 | 25 | 25 |
| | UA-11 | | | | | | | | |
| (C) | DPHA | | | | | | | | |
| | UA-12 | 2.5 | 2.5 | 2.5 | 15 | 15 | 5 | 12.5 | 6 |
| | UA-13 | | | | | | | | |
| | UA-14 | | | | | | | | |
| | UA-15 | | | | | | | | |
| | UA-16 | | | | | | | | |
| Others | I-1 | 3 | 3 | 3 | 3 | 3 | 3 | 3 | 3 |
| | H-1 | 0.5 | 0.5 | 0.5 | 0.5 | 0.5 | 0.5 | 0.5 | 0.5 |
| | UVA3 | 4 | 4 | 4 | 4 | 4 | 4 | 4 | 4 |
| Chemical resistance | | 60 | 60 | 60 | 60 | 60 | 60 | 60 | 60 |
| Wear resistance | | 12 | 11 | 11 | 11 | 9 | 10 | 11 | 11 |
| Weathering resistance A | | 816 | 816 | 816 | 912 | 960 | 960 | 960 | 960 |
| Weathering resistance B | | 1056 | 984 | 1056 | 1152 | 1056 | 1152 | 1152 | 1152 |

[Table 3]

| | | Example | | | | | | | |
|---|---|---|---|---|---|---|---|---|---|
| | | 17 | 18 | 19 | 20 | 21 | 22 | 23 | 24 |
| (A) | A-1 | 21 | 21 | 20 | 20 | 20 | 30 | 40 | 20 |
| (B-1) | UA-1 | | | | | | | | |
| | UA-2 | | | | | | | | |
| | UA-3 | | | | | | | | |
| | UA-4 | 40 | 40 | 40 | 70 | 0 | 35 | 30 | 40 |
| | UA-5 | | | | | | | | |
| | UA-6 | | | | | | | | |
| (B-2) | UA-7 | | | | | | | | |
| | UA-8 | | | | | | | | |
| | UA-9 | | | | | | | | |
| | UA-10 | 30 | 30 | 30 | 0 | 70 | 30 | 20 | 30 |
| | UA-11 | | | | | | | | |
| (C) | DPHA | 9 | | | | | | | |
| | UA-12 | | 9 | 10 | 10 | 10 | 5 | 10 | |
| | UA-13 | | | | | | | | 10 |
| | UA-14 | | | | | | | | |
| | UA-15 | | | | | | | | |
| | UA-16 | | | | | | | | |
| Others | I-1 | 3 | 3 | 3 | 3 | 3 | 3 | 3 | 3 |
| | H-1 | 0.5 | 0.5 | 0.5 | 0.5 | 0.5 | 0.5 | 0.5 | 0.5 |
| | UVA3 | 4 | 4 | 4 | 4 | 4 | 4 | 4 | 4 |
| Chemical resistance | | 60 | 60 | 60 | 60 | 60 | 60 | 60 | 60 |
| Wear resistance | | 10 | 9 | 9 | 11 | 9 | 11 | 9 | 8 |
| Weathering resistance A | | 912 | 960 | 960 | 960 | 960 | 960 | 960 | 1056 |
| Weathering resistance B | | 1152 | 1152 | 1152 | 1152 | 1056 | 1152 | 1152 | 1200 |

[Table 4]

| | | Example | | | | | | | |
|---|---|---|---|---|---|---|---|---|---|
| | | 25 | 26 | 27 | 28 | 29 | 30 | 31 | 32 |
| (A) | A-1 | 20 | 20 | 20 | 20 | 20 | 20 | 20 | 20 |
| (B-1) | UA-1 | | | | | | 40 | | |
| | UA-2 | | | | | | | 40 | |
| | UA-3 | | | | | | | | 40 |
| | UA-4 | 40 | 40 | 40 | | | | | |
| | UA-5 | | | | 40 | | | | |
| | UA-6 | | | | | 40 | | | |

(continued)

| | | Example | | | | | | | |
|---|---|---|---|---|---|---|---|---|---|
| | | 25 | 26 | 27 | 28 | 29 | 30 | 31 | 32 |
| (B-2) | UA-7 | | | | | | | | |
| | UA-8 | | | | | | | | |
| | UA-9 | | | | | | | | |
| | UA-10 | 30 | 30 | 30 | 30 | 30 | 30 | 30 | 30 |
| | UA-11 | | | | | | | | |
| (C) | DPHA | | | | | | | | |
| | UA-12 | | | | | | | | |
| | UA-13 | | | | | | | | |
| | UA-14 | 10 | | | | | | | |
| | UA-15 | | 10 | | 10 | 10 | 10 | 10 | 10 |
| | UA-16 | | | 10 | | | | | |
| Others | I-1 | 3 | 3 | 3 | 3 | 3 | 3 | 3 | 3 |
| | H-1 | 0.5 | 0.5 | 0.5 | 0.5 | 0.5 | 0.5 | 0.5 | 0.5 |
| | UVA3 | 4 | 4 | 4 | 4 | 4 | 4 | 4 | 4 |
| Chemical resistance | | 60 | 60 | 60 | 60 | 60 | 60 | 60 | 60 |
| Wear resistance | | 9 | 8 | 8 | 7 | 7 | 6 | 6 | 6 |
| Weathering resistance A | | 1008 | 1104 | 1104 | 1152 | 1152 | 1152 | 1200 | 1200 |
| Weathering resistance B | | 1200 | 1200 | 1200 | 1296 | 1296 | 1296 | 1296 | 1296 |

[Table 5]

| | | Example | | | | | | |
|---|---|---|---|---|---|---|---|---|
| | | 33 | 34 | 35 | 36 | 37 | 38 | 39 |
| (A) | A-1 | 20 | 20 | 20 | 20 | 20 | 20 | 20 |
| (B-1) | UA-1 | | | | | | | |
| | UA-2 | | | | | | | |
| | UA-3 | 40 | 40 | 40 | 40 | 40 | 40 | 40 |
| | UA-4 | | | | | | | |
| | UA-5 | | | | | | | |
| | UA-6 | | | | | | | |
| (B-2) | UA-7 | | 30 | | | 30 | 30 | 30 |
| | UA-8 | | | 30 | | | | |
| | UA-9 | | | | 30 | | | |
| | UA-10 | | | | | | | |
| | UA-11 | 30 | | | | | | |

(continued)

| | | Example | | | | | | |
|---|---|---|---|---|---|---|---|---|
| | | 33 | 34 | 35 | 36 | 37 | 38 | 39 |
| (C) | DPHA | | | | | | | |
| | UA-12 | | | | | | | |
| | UA-13 | | | | | | | |
| | UA-14 | | | | | | | |
| | UA-15 | 10 | 10 | 10 | 10 | 10 | 10 | 10 |
| | UA-16 | | | | | | | |
| Others | I-1 | 3 | 3 | 3 | 3 | 3 | 3 | 3 |
| | H-1 | 0.5 | 0.5 | 0.5 | 0.5 | | 0.5 | |
| | H-2 | | | | | 0.5 | | |
| | H-3 | | | | | | | 0.5 |
| | UVA3 | 4 | 4 | 4 | 4 | 4 | 6 | 4 |
| Chemical resistance | | 60 | 60 | 60 | 60 | 60 | 60 | 60 |
| Wear resistance | | 6 | 5 | 5 | 5 | 5 | 5 | 6 |
| Weathering resistance A | | 1200 | 1248 | 1248 | 1248 | 1248 | 1200 | 1248 |
| Weathering resistance B | | 1296 | 1296 | 1296 | 1296 | 1296 | 1296 | 1296 |

[Table 6]

| | | Example | | | | | | |
|---|---|---|---|---|---|---|---|---|
| | | 40 | 41 | 42 | 43 | 44 | 45 | 46 |
| (A) | A-1 | 20 | 20 | 20 | 19.8 | 19.5 | 19 | 18 |
| (B-1) | UA-1 | | | | | | | |
| | UA-2 | | | | | | | |
| | UA-3 | 40 | 40 | 40 | 39.6 | 39 | 38 | 36 |
| | UA-4 | | | | | | | |
| | UA-5 | | | | | | | |
| | UA-6 | | | | | | | |
| (B-2) | UA-7 | 30 | 30 | 30 | 29.7 | 29.25 | 28.5 | 27 |
| | UA-8 | | | | | | | |
| | UA-9 | | | | | | | |
| | UA-10 | | | | | | | |
| | UA-11 | | | | | | | |
| (C) | DPHA | | | | | | | |
| | UA-12 | | | | | | | |
| | UA-13 | | | | | | | |
| | UA-14 | | | | | | | |
| | UA-15 | 10 | 10 | 10 | 9.9 | 9.75 | 9.5 | 9 |
| | UA-16 | | | | | | | |

(continued)

| | | Example | | | | | | |
|---|---|---|---|---|---|---|---|---|
| | | 40 | 41 | 42 | 43 | 44 | 45 | 46 |
| Others | S-1 | | | | 1 | 2.5 | 5 | 10 |
| | I-1 | 3 | 3 | 3 | 3 | 3 | 3 | 3 |
| | H-1 | 0.5 | 0.5 | 0.5 | 0.5 | 0.5 | 0.5 | 0.5 |
| | UVA1 | 4 | | | | | | |
| | UVA2 | | 4 | | | | | |
| | UVA3 | 2 | 2 | 2 | 2 | 2 | 2 | 2 |
| | UVA4 | | | 6 | 6 | 6 | 6 | 6 |
| Chemical resistance | | 60 | 60 | 60 | 60 | 60 | 60 | 60 |
| Wear resistance | | 6 | 6 | 6 | 3 | 2 | 2 | 2 |
| Weathering resistance A | | 1296 | 1296 | 1296 | 1296 | 1296 | 1296 | 1296 |
| Weathering resistance B | | 1296 | 1296 | 1296 | 1296 | 1296 | 1296 | 1296 |

[Table 7]

| | | Comparative Example | | | |
|---|---|---|---|---|---|
| | | 1 | 2 | 3 | 4 |
| (A) | A-1 | 22 | 0 | 80 | 0 |
| (B-1) | UA-1 | | | | |
| | UA-2 | | | | |
| | UA-3 | | | | |
| | UA-4 | 18 | 20 | 0 | 90 |
| | UA-5 | | | | |
| | UA-6 | | | | |
| (B-2) | UA-7 | | | | |
| | UA-8 | | | | |
| | UA-9 | | | | |
| | UA-10 | 60 | 60 | 0 | 8 |
| | UA-11 | | | | |
| (C) | DPHA | | | | |
| | UA-12 | 0 | 20 | 20 | 2 |
| | UA-13 | | | | |
| | UA-14 | | | | |
| | UA-15 | | | | |
| | UA-16 | | | | |
| Others | I-1 | 3 | 3 | 3 | 3 |
| | H-1 | 0.5 | 0.5 | 0.5 | 0.5 |
| | UVA3 | 4 | 4 | 4 | 4 |
| Chemical resistance | | 12 | 48 | 12 | 24 |
| Wear resistance | | 17 | 15 | 10 | 20 |

(continued)

| | Comparative Example | | | |
|---|---|---|---|---|
| | 1 | 2 | 3 | 4 |
| Weathering resistance A | 960 | 672 | 576 | 672 |
| Weathering resistance B | 1152 | 624 | 1296 | 672 |

The abbreviations shown in Tables 1 to 7 indicate the following compounds or the compounds obtained in the Synthesis Examples above.

A-1: 2-Hydroxyethyl isocyanurate triacrylate
UA-1 to UA-16: Compounds obtained in Synthesis Examples 1 to 16
DPHA: Dipentaerythritol hexaacrylate (KAYARAD DPHA, manufactured by Nippon Kayaku Co., Ltd.)
S-1: Modified silica fine particles ("MEK-AC2140Z", manufactured by Nissan Chemical Corporation)
I-1: Photoinitiator "Omnirad 819" (trade name, manufactured by IGM RESINS B.V)
H-1: Non-reactive HALS "Tinuvin 123" (trade name, manufactured by BASF AG)
H-2: Non-reactive HALS "Tinuvin 152" (trade name, manufactured by BASF AG)
H-3: Reactive HALS "ADK STAB LA-82" (trade name, manufactured by ADEKA Corporation)
UVA1: Triazine-type ultraviolet light absorber "Tinuvin 400" (trade name, manufactured by BASF AG)
UVA2: Triazine-type ultraviolet light absorber "ADK STAB LA-46" (trade name, manufactured by ADEKA Corporation)
UVA3: Triazine-type ultraviolet light absorber "Tinuvin 479" (trade name, manufactured by BASF AG)
UVA4: Reactive ultraviolet light absorber "RUVA-93" (trade name, manufactured by Otsuka Chemical Co., Ltd.)

From the results of Examples 1 to 46, it was found that the cured film of the active-energy-ray-curable coating composition of the invention had excellent chemical resistance, wear resistance, weathering resistance, and adhesion.

On the other hand, it was found that Comparative Example 1 containing no component (C) had poor chemical resistance; that Comparative Example 2 or 4 containing no component (A) had poor wear resistance or weathering resistance; and that Comparative Example 3 containing no component (B) had poor chemical resistance and weathering resistance.

(Examples 47 to 60 and Comparative Examples 5 to 7)

[Preparation of a specimen for evaluation, and bending processing test]

The active-energy-ray-curable coating composition in Example 2 was applied onto a polycarbonate substrate having a thickness of 2 mm ("Carboglass Polish Clear", manufactured by AGC Inc.) using a bar coater, and dried at 80°C for 4 minutes, and then irradiated in air using an ultraviolet light irradiation apparatus (high-pressure mercury lamp, manufactured by GS-YUASA International Ltd.) at an illuminance of 200 $mW{\bullet}cm^2$ and at an irradiation dose of 1,000 $mJ/m^2$, obtaining a laminated material for bending processing in Example 47, which has a cured film having a thickness of 20 $\mu m$. Laminated materials for bending processing in Examples 48 to 60 and Comparative Examples 5 to 7 were individually obtained in substantially the same manner as in Example 47 except that, instead of the active-energy-ray-curable coating composition in Example 2, the active-energy-ray-curable coating compositions in the Examples and the Comparative Examples indicated by "Composition" shown in Tables 8 to 10 were individually used.

[Evaluation for appearance]

The laminated material for bending processing in each Example was heated using a thermostat at 170°C for 5 minutes, and, with respect to the resultant cured film in the laminated material, a laminated material in which generation of wrinkles was not found was acceptable (A), and a laminated material in which generation of wrinkles was found was unacceptable (B). The results are shown in the row of "Appearance" in Tables 8 to 10.

[Evaluation for adhesion]

The laminated material for bending processing in each Example was heated using a thermostat at 170°C for 5 minutes, and then the laminated material for bending processing was wrapped around the outer surface of a cylinder having a diameter of 10.5 to 3 cm so that the cured film was positioned outside, and evaluation of flexing properties (bending processability) was made. With respect to the largest diameter of the cylinder with which generation of a crack

was not found in the cured film, a laminated material in which no peeling was caused was acceptable (A), and a laminated material in which peeling was caused was unacceptable (B). The results are shown in the row of "Adhesion" in Tables 8 to 10.

[Evaluation for heat flexing resistance]

The laminated material for bending processing in each Example was heated using a thermostat at 170°C for 5 minutes, and then the laminated material for bending processing was wrapped around the outer surface of a cylinder having a diameter of 10.5 to 3 cm so that the cured film was positioned outside, and evaluation of flexing properties (bending processability) was made. The largest diameter of the cylinder with which generation of a crack was not found in the cured film was obtained as an evaluation result, and a laminated material having a largest diameter of 10 cm or less was acceptable. The results (unit: cm) are shown in the row of "Flexing resistance" in Tables 8 to 10.

[Table 8]

| | Example | | | | | | |
|---|---|---|---|---|---|---|---|
| | 47 | 48 | 49 | 50 | 51 | 52 | 53 |
| Composition | Example 2 | Example 6 | Example 9 | Example 10 | Example 11 | Example 19 | Example 24 |
| Thickness (μm) | 20 | 20 | 20 | 20 | 20 | 20 | 20 |
| Appearance | A | A | A | A | A | A | A |
| Adhesion | A | A | A | A | A | A | A |
| Flexing resistance | 8 | 6 | 5 | 6 | 5 | 4.5 | 4.5 |

[Table 9]

| | Example | | | | | | |
|---|---|---|---|---|---|---|---|
| | 54 | 55 | 56 | 57 | 58 | 59 | 60 |
| Composition | Example 25 | Example 26 | Example 27 | Example 29 | Example 32 | Example 34 | Example 46 |
| Thickness (μm) | 20 | 20 | 20 | 20 | 20 | 20 | 20 |
| Appearance | A | A | A | A | A | A | A |
| Adhesion | A | A | A | A | A | A | A |
| Flexing resistance | 4.5 | 4 | 4 | 3.5 | 3 | 3 | 3 |

[Table 10]

| | Comparative Example | | |
|---|---|---|---|
| | 5 | 6 | 7 |
| Composition | Comparative Example 1 | Comparative Example 2 | Comparative Example 3 |
| Thickness (μm) | 20 | 20 | 20 |
| Appearance | B | A | A |
| Adhesion | A | B | A |
| Flexing resistance | 4.5 | 6 | 10.5 |

From the above results, it was found that the cured films of the active-energy-ray-curable coating compositions in Examples 47 to 60 of the invention had excellent bending processability. In contrast, the cured films in Comparative Examples 5 to 7 were found to be poor in any of the appearance, adhesion, and flexing resistance.

## Claims

**1.** An active-energy-ray-curable coating composition comprising components (A) to (C),

the active-energy-ray-curable coating composition containing a compound represented by the following formula (1) as the component (A),
containing a compound represented by the following formula (2) as the component (B), and
containing a compound having 6 or more (meth)acryloyl groups per molecule as the component (C):

[Chem. 1]

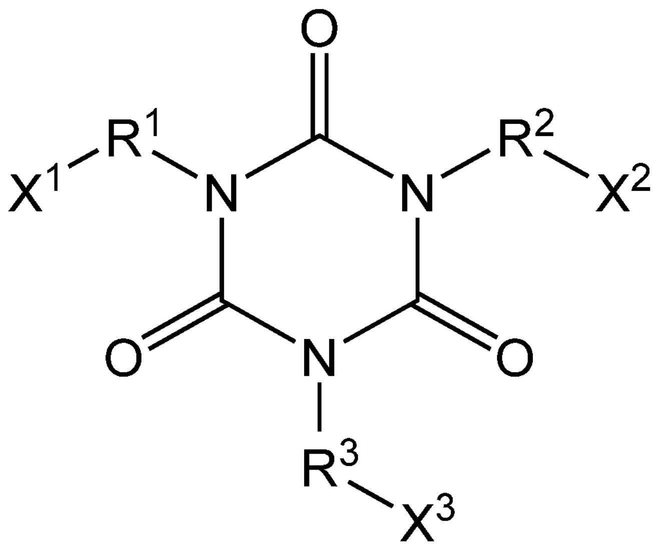

(1)

wherein each of $R^1$, $R^2$, and $R^3$ independently represents an oxyalkylene group or a polyoxyalkylene group, and each of $X^1$, $X^2$, and $X^3$ independently represents $CH_2=CR^4-CO-$, $CH_2=CR^4-CO(O(CH_2)_5-CO)_{a1}-$, a hydrogen atom, or an alkyl group, wherein $R^4$ represents a hydrogen atom or a methyl group, and a plurality of $R^4$'s are the same or different, and a1 is an integer of 1 or more, with the proviso that at least two of $X^1$ to $X^3$ are $CH_2=CR^4-CO-$ or $CH_2=CR^4-CO(O(CH_2)_5-CO)_{a1}-$;

[Chem. 2]

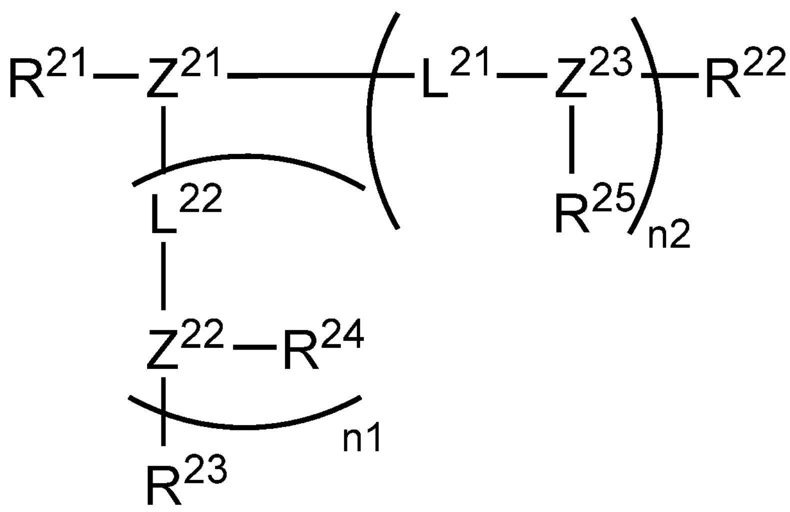

(2)

wherein each of $R^{21}$ to $R^{25}$ independently represents a group having a polymerizable group,
each of $Z^{21}$ to $Z^{23}$ independently represents a group represented by the following formula (2z),
each of $L^{21}$ and $L^{22}$ independently represents a divalent linking group, and

each of n1 and n2 is independently 0 or 1,

[Chem. 3]

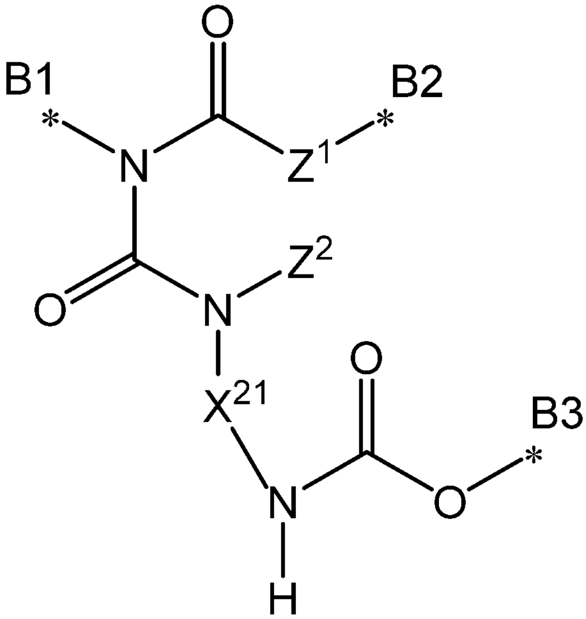

(2z)

wherein $X^{21}$ represents an alkylene group having 2 to 17 carbon atoms,
* is a bonding site,
$Z^1$ represents an oxygen atom or a nitrogen atom, and $Z^2$ represents a hydrogen atom or - C(=O)-, wherein when $Z^1$ is an oxygen atom, $Z^2$ is a hydrogen atom, or, when $Z^1$ is a nitrogen atom, $Z^2$ is -C(=O)- and the nitrogen atom of $Z^1$ and -C(=O)- of $Z^2$ are bonded to form a ring, wherein when the formula (2z) is $Z^{21}$ in the formula (2), the bonding site * indicated by B1 is bonded to $R^{21}$, the bonding site indicated by B2 is bonded to $L^{21}$ or $R^{22}$, and the bonding site indicated by B3 is bonded to $L^{22}$ or $R^{23}$; when the formula (2z) is $Z^{22}$ in the formula (2), the bonding site * indicated by B1 is bonded to $L^{22}$, the bonding site indicated by B2 is bonded to $R^{24}$, and the bonding site indicated by B3 is bonded to $R^{23}$; and when the formula (2z) is $Z^{23}$ in the formula (2), the bonding site * indicated by B1 is bonded to $L^{21}$, the bonding site indicated by B2 is bonded to $R^{22}$, and the bonding site indicated by B3 is bonded to $R^{25}$.

**2.** The active-energy-ray-curable coating composition according to claim 1, wherein the compound represented by the formula (2) above is any one of compounds represented by the following formulae (2-1) to (2-4):

[Chem. 4]

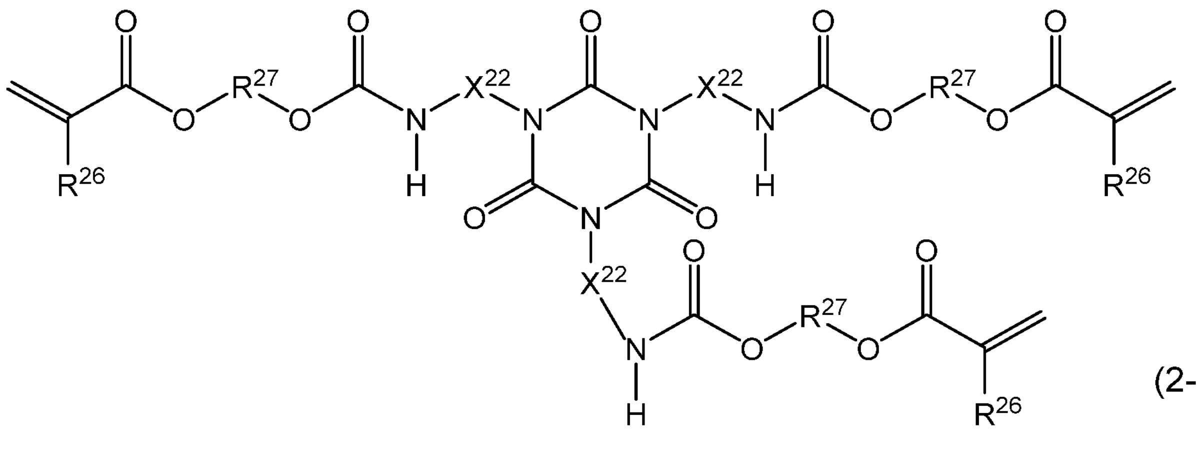

(2-1)

wherein each $R^{26}$ independently represents a hydrogen atom or a methyl group,
each $R^{27}$ independently represents an alkylene group, $R^A-(O-CO-(CH_2)_5)_n-$, or $R^A-(O-(CH_2)_4)_n-$, wherein $R^A$

represents an alkylene group, and each n independently represents an integer of 1 to 10, and each $X^{22}$ independently represents an alkylene group having 2 to 17 carbon atoms, wherein a plurality of $R^{26}$'s, $R^{27}$'s, and $X^{22}$'s in the formula are the same or different;

[Chem. 5]

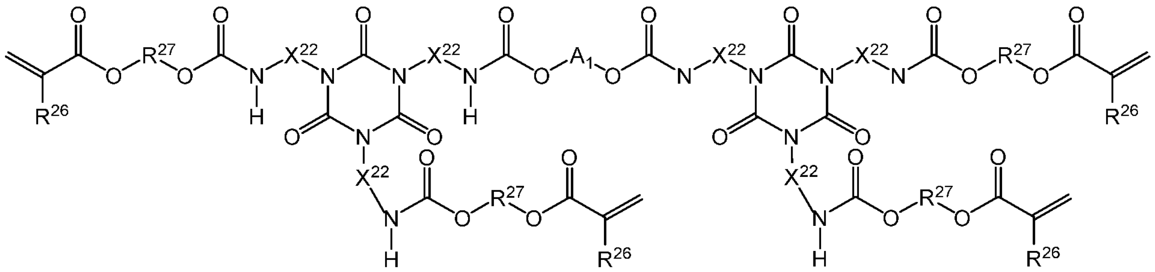

(2-2)

wherein $R^{26}$, $R^{27}$, and $X^{22}$ are as defined above, and

$A_1$ represents a structure obtained by removing a hydroxyl group from an end of an alkylene diol, a caprolactone-modified diol, or polytetramethylene glycol, wherein a plurality of $R^{26}$'s, $R^{27}$'s, $X^{22}$'s, and $A_1$'s in the formula are the same or different;

[Chem. 6]

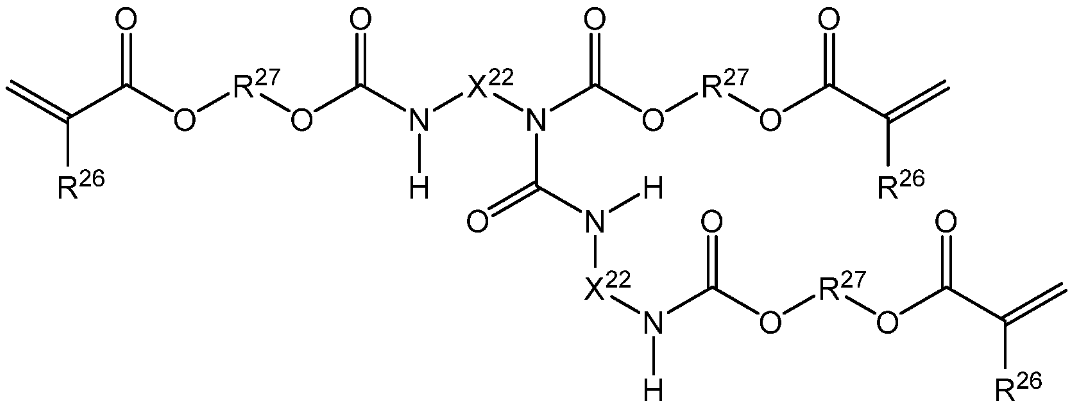

(2-3)

wherein $R^{26}$, $R^{27}$, and $X^{22}$ are as defined above, and a plurality of $R^{26}$'s, $R^{27}$'s, and $X^{22}$'s in the formula are the same or different;

[Chem. 7]

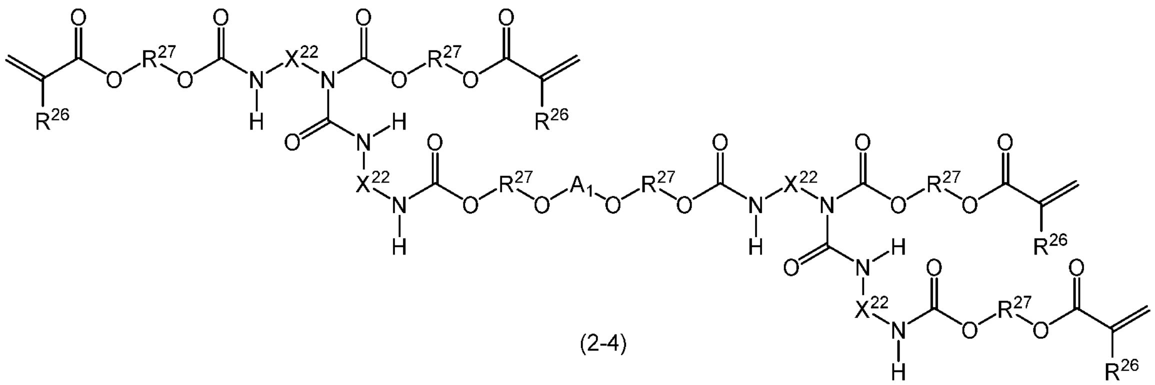

(2-4)

wherein $R^{26}$, $R^{27}$, $X^{22}$, and $A_1$ are as defined above, and a plurality of $R^{26}$'s, $R^{27}$'s, and $X^{22}$'s in the formula are the same or different.

**3.** The active-energy-ray-curable coating composition according to claim 1, wherein the amount of the contained component (A) is 1 to 85% by mass, the amount of the contained component (B) is 14 to 98% by mass, and the amount of the contained component (C) is 1 to 20% by mass, based on the total mass of the solids contained in the components (A) to (C).

**4.** The active-energy-ray-curable coating composition according to claim 1, wherein the component (C) is a polyfunctional urethane acrylate obtained by reacting a diisocyanate compound or a triisocyanate compound and a compound represented by the following formula (3-1) or (3-2):

[Chem. 8]

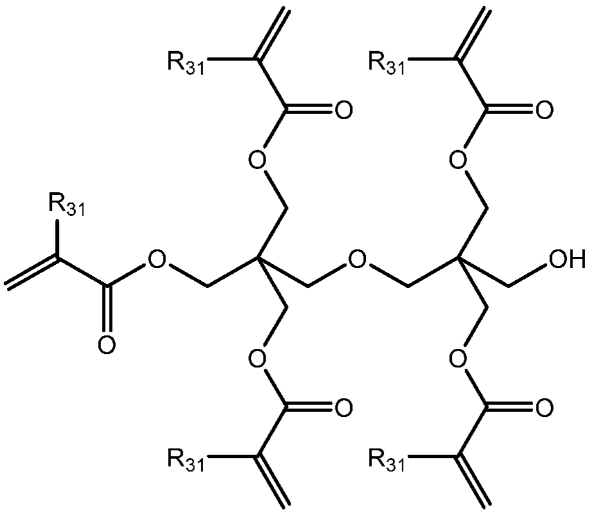

(3-1)

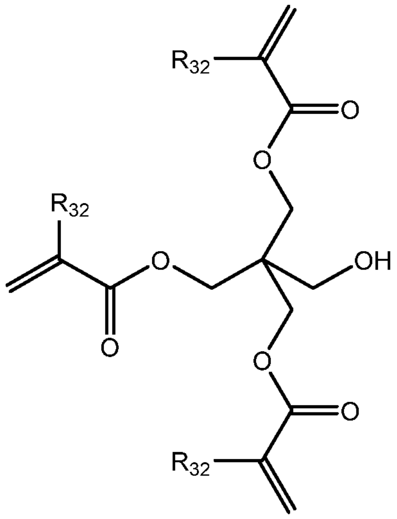

(3-2)

wherein each of $R^{31}$ and $R^{32}$ independently represents a hydrogen atom or a methyl group, and a plurality of $R^{31}$'s and $R^{32}$'s in the formula are the same or different.

**5.** The active-energy-ray-curable coating composition according to claim 4, wherein the component (C) is a polyfunctional urethane acrylate obtained by reacting an isocyanate compound represented by the following formula (3-3) or (3-4) and the compound represented by the formula (3-1) or (3-2) above:

[Chem. 9]

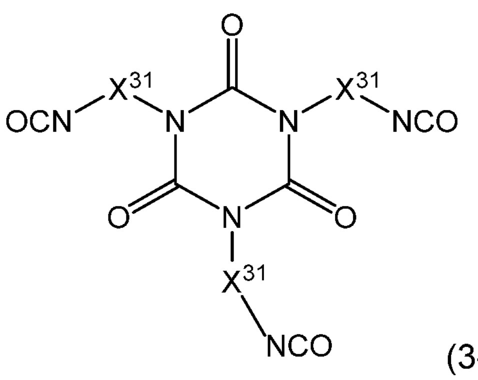

(3-3)

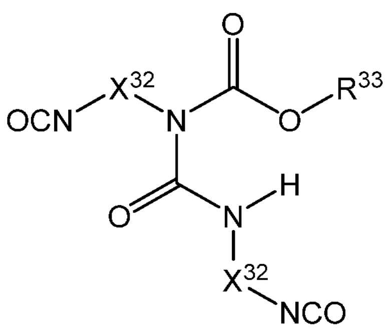

(3-4)

wherein each of $X^{31}$ and $X^{32}$ independently represents an alkylene group having 2 to 17 carbon atoms, and $R^{33}$ represents $-R^C-O-CO-CH=CH_2$, or a structure obtained by removing a hydroxyl group from the compound represented by the formula (3-1) or (3-2) above, wherein $R^C$ represents an alkylene group, wherein a plurality of $X^{31}$'s and $X^{32}$'s in the formula are the same or different.

6. The active-energy-ray-curable coating composition according to claim 2, wherein the component (B) comprises a component (B-1) and a component (B-2),

   wherein the component (B-1) comprises a compound of the formula (2-1) or (2-3) wherein at least one $R^{27}$ is $R^A$-(O-CO-$(CH_2)_5)_n$- or $R^A$-(O-$(CH_2)_4)_n$-, or a compound of the formula (2-2) or (2-4) wherein $A_1$ has a structure obtained by removing a hydroxyl group from an end of polytetramethylene glycol or polycaprolactone diol, and wherein the component (B-2) comprises a compound of the formula (2-1) or (2-3) wherein $R^{27}$ is an alkylene group, or a compound of the formula (2-2) or (2-4) wherein $A_1$ has a structure obtained by removing a hydroxyl group from an end of an alkylene diol,
   wherein the amount of the contained component (B-1) is 9 to 90% by mass, and the amount of the contained component (B-2) is 5 to 60% by mass, based on the total mass of the solids contained in the components (A) to (C).

7. The active-energy-ray-curable coating composition according to claim 1, which does not contain an organic solvent, or contains an organic solvent in an amount of 30% by mass or less, based on the total mass of the composition.

8. A molded article having a cured film of the active-energy-ray-curable coating composition according to any one of claims 1 to 4, and a substrate.

9. The molded article according to claim 8, wherein the substrate is a polycarbonate resin.

10. The molded article according to claim 8, which is for use in the automobile headlight lens application, automobile glazing application, automobile body exterior trim application, plastic building material application, or steel plate building material application.

11. A molded article which is obtained by curving the molded article according to claim 9 by heat bending processing.

**INTERNATIONAL SEARCH REPORT**

International application No. **PCT/JP2023/024117**

**A. CLASSIFICATION OF SUBJECT MATTER**

***C09D 4/02***(2006.01)i; ***B32B 27/30***(2006.01)i; ***C08F 290/06***(2006.01)i; ***C08J 7/04***(2020.01)i; ***C09D 175/16***(2006.01)i
FI: C09D4/02; B32B27/30 A; C08F290/06; C08J7/04 B CFD; C09D175/16

According to International Patent Classification (IPC) or to both national classification and IPC

**B. FIELDS SEARCHED**

Minimum documentation searched (classification system followed by classification symbols)

C09D4/02; B32B27/30; C08F290/06; C08J7/04; C09D175/16

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2020-193256 A (DAINIPPON PRINTING CO., LTD.) 03 December 2020 (2020-12-03) claims 1-8, paragraphs [0002], [0033]-[0072], [0079], [0128], examples 1-6, 8 | 1-5, 7-11 |
| A | | 6 |
| X | JP 2010-111810 A (MITSUBISHI RAYON CO., LTD.) 20 May 2010 (2010-05-20) claims 1-8, paragraphs [0007]-[0036], examples 1-3, 5-11, 13, comparative examples 1, 4-6, 8 | 1-3, 7-11 |
| A | | 4-6 |
| X | JP 2007-314770 A (MITSUBISHI RAYON CO., LTD.) 06 December 2007 (2007-12-06) claims 1-7, paragraphs [0022]-[0043], table 1, examples 6-9, 11, table 2, comparative examples 4, 5, 7 | 1-3, 7-11 |
| A | | 4-6 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 August 2023** | **12 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | Telephone No. |

Form PCT/ISA/210 (second sheet) (January 2015)

**INTERNATIONAL SEARCH REPORT**
**Information on patent family members**

International application No.
**PCT/JP2023/024117**

| Patent document cited in search report | Publication date (day/month/year) | Patent family member(s) | Publication date (day/month/year) |
|---|---|---|---|
| JP 2020-193256 A | 03 December 2020 | (Family: none) | |
| JP 2010-111810 A | 20 May 2010 | (Family: none) | |
| JP 2007-314770 A | 06 December 2007 | US 2009/0111904 A1<br>claims 1-10, paragraphs [0039]-[0063], table 1, examples 1-6 to 1-9, 1-11<br>WO 2007/125746 A1<br>EP 2011837 A1<br>CN 101437904 A<br>KR 10-2009-0013802 A<br>TW 200801141 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007314770 A
- JP 5956401 B